(19) Europäisches Patentamt
European Patent Office
Office européen des brevets

(11) EP 4 506 390 B1

(12) **EUROPEAN PATENT SPECIFICATION**

(45) Date of publication and mention of the grant of the patent:
**25.02.2026 Bulletin 2026/09**

(21) Application number: **23784789.2**

(22) Date of filing: **06.04.2023**

(51) International Patent Classification (IPC):
***C08G 63/672*** *(2006.01)* ***C08G 63/187*** *(2006.01)*
***C08G 63/64*** *(2006.01)* ***G02B 1/04*** *(2006.01)*

(52) Cooperative Patent Classification (CPC):
(C-Sets available)
**G02B 1/041; C08G 63/185; C08G 63/189; C08G 63/197; C08G 63/672** (Cont.)

(86) International application number:
**PCT/JP2023/014162**

(87) International publication number:
**WO 2023/195505 (12.10.2023 Gazette 2023/41)**

(54) **THERMOPLASTIC RESIN AND OPTICAL LENS INCLUDING SAME**
THERMOPLASTISCHES HARZ UND OPTISCHE LINSE DAMIT
RÉSINE THERMOPLASTIQUE ET LENTILLE OPTIQUE LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.04.2022 JP 2022063949**
**17.06.2022 JP 2022097961**

(43) Date of publication of application:
**12.02.2025 Bulletin 2025/07**

(73) Proprietor: **MITSUBISHI GAS CHEMICAL COMPANY, INC.**
**Chiyoda-ku**
**Tokyo 100-8324 (JP)**

(72) Inventors:
- **KATO, Noriyuki**
  **Tokyo 100-8324 (JP)**
- **NISHIMORI, Katsushi**
  **Tokyo 125-8601 (JP)**
- **MOTEGI, Atsushi**
  **Tokyo 125-8601 (JP)**
- **ISHIHARA, Kentaro**
  **Tokyo 100-8324 (JP)**
- **MURATA SUZUKI, Shoko**
  **Tokyo 125-8601 (JP)**
- **HARADA, Yutaro**
  **Tokyo 125-8601 (JP)**

(74) Representative: **Hoffmann Eitle**
**Patent- und Rechtsanwälte PartmbB**
**Arabellastraße 30**
**81925 München (DE)**

(56) References cited:
**WO-A1-2021/187075** **WO-A1-2021/187075**
**WO-A1-2021/220811** **WO-A1-2021/220811**
**JP-A- 2001 072 872** **JP-A- 2018 059 074**
**JP-B2- 6 968 642**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**G02B 1/041, C08L 69/00**

## Description

### Technical Field

The present invention relates to a thermoplastic resin and an optical lens comprising the same. More specifically, the present invention relates to a polyester carbonate resin or a polyester resin, and an optical lens comprising the same.

### Background Art

As materials for optical lenses used in the optical systems of various types of cameras such as a camera, a film-integrated camera and a video camera, optical glasses or optical resins have been used. Such optical glasses are excellent in heat resistance, transparency, dimensional stability, chemical resistance and the like. However, the optical glasses are problematic in terms of high material costs, poor formability and low productivity.

On the other hand, an optical lens consisting of an optical resin is advantageous in that it can be produced in a large amount by injection molding, and as materials having a high refractive index for use in camera lenses, polycarbonate, polyester carbonate, polyester resins, etc. have been used.

When such an optical resin is used as an optical lens, the used optical resin is required to have heat resistance, transparency, low water absorbability, chemical resistance, low birefringence, moist-heat resistance, etc., in addition to optical properties such as refractive index and Abbe number. In particular, in recent years, optical lenses having a high refractive index and high heat resistance have been required, and thus, various resins have been developed (Patent Literatures 1 to 6).

### Citation List

### Patent Literature

Patent Literature 1: JP Patent Publication (Kokai) No. 2018-2893 A
Patent Literature 2: JP Patent Publication (Kokai) No. 2018-2894 A
Patent Literature 3: JP Patent Publication (Kokai) No. 2018-2895 A
Patent Literature 4: JP Patent Publication (Kokai) No. 2018-59074 A
Patent Literature 5: International Publication WO2017/078073 Patent Literature 6: WO 2021/187075 A1

### Summary of Invention

### Technical Problem

It is an object of the present invention to provide a thermoplastic resin that is excellent in optical properties such as refractive index and Abbe number, and is also excellent in heat resistance, and an optical lens using the same.

### Solution to Problem

As a result of intensive studies directed towards solving the conventional problem, the present inventors have found that a thermoplastic resin that is excellent in optical properties such as refractive index and Abbe number, and is also excellent in heat resistance, can be obtained by using, as a raw material, a monomer having a specific structure, in which a dicarboxylic acid compound is derived from a biphenanthrol used as a raw material, thereby completing the present invention.

Specifically, the present invention includes the following aspects.

< 1 > A thermoplastic resin, comprising a constituent unit (A) derived from a monomer represented by the following general formula (1):

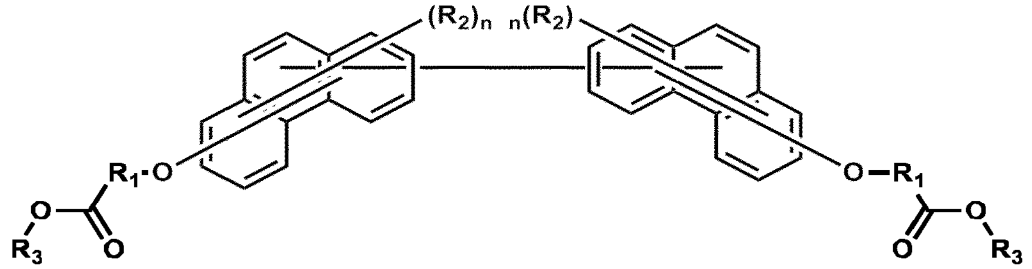

(1)

**wherein** $R_1$ each independently represents an alkylene group containing 1 to 4 carbon atoms, $R_2$ each independently represents an alkyl group containing 1 to 6 carbon atoms, an aryl group containing 6 to 18 carbon atoms or a halogen atom, n each independently represents 0 or an integer of 1 to 4, and $R_3$ each independently represents a hydrogen atom, an alkyl group containing 1 to 6 carbon atoms or an alkenyl group containing 2 to 4 carbon atoms.

< 2 > The thermoplastic resin according to the above < 1 >, wherein the monomer represented by the general formula (1) is a monomer represented by the following general formula (1a-1):

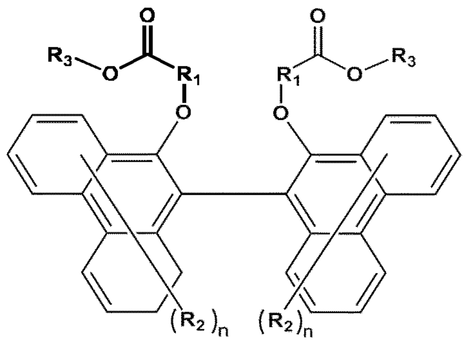

(1a-1)

wherein $R_1$, $R_2$, $R_3$, and n are as defined in the general formula (1).

< 3 > The thermoplastic resin according to the above < 1 > or < 2 >, wherein the thermoplastic resin is a polyester carbonate resin or a polyester resin.

< 4 > The thermoplastic resin according to any one of the above < 1 > to < 3 >, which comprises a constituent unit (B) derived from a monomer represented by the following general formula (6) and/or a constituent unit (C) derived from a monomer represented by the following general formula (7):

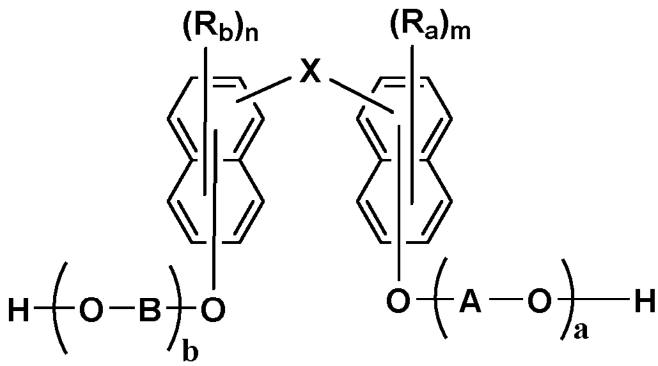

(6)

wherein

$R_a$ and $R_b$ are each independently selected from the group consisting of: a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a

substituent, and -C ≡ C-$R_h$, wherein

$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X represents a single bond or a fluorene group optionally having a substituent,

A and B each independently represent an alkylene group containing 1 to 5 carbon atoms and optionally having a substituent,

m and n each independently represent an integer of 0 to 6, and

a and b each independently represent an integer of 0 to 10, and/or

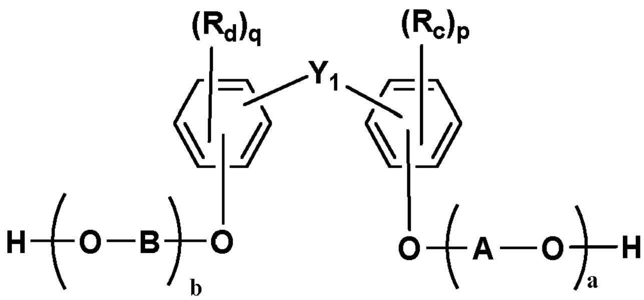

(7)

wherein

$R_c$ and $R_d$ are each independently selected from the group consisting of: a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent,

$Y_1$ represents a single bond, a fluorene group optionally having a substituent, or any one of the structural formulae represented by the following formulae (8) to (14):

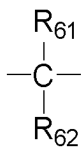

(8)

$-S-$

(9)

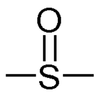

(10)

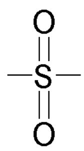

(11)

$-(CH_2)_r-$

(12)

$-O-$

(13)

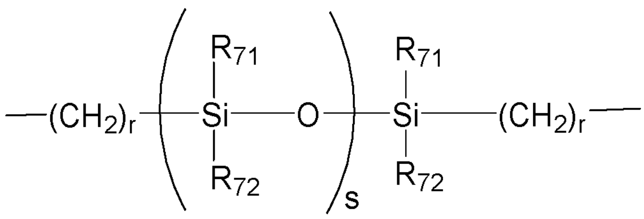

(14)

(wherein, in the formulae (8) to (14),

$R_{61}$, $R_{62}$, $R_{71}$ and $R_{72}$ each independently represent a hydrogen atom, a halogen atom, an alkyl group containing 1 to 20 carbon atoms and optionally having a substituent, or an aryl group containing 6 to 30 carbon atoms and optionally having a substituent, or represent a carbon ring or heterocyclic ring containing 1 to 20 carbon atom and optionally having a substituent, which is formed as a result that $R_{61}$ and $R_{62}$, or $R_{71}$ and $R_{72}$ bind to each other,

r and s each independently represent an integer of 0 to 5000),

A and B each independently represent an alkylene group containing 1 to 5 carbon atoms and optionally having a substituent,

p and q each independently represent an integer of 0 to 4, and

a and b each independently represent an integer of 0 to 10.

< 5 > The thermoplastic resin according to the above < 4 >, wherein, in the general formula (6) and the general formula (7), A and B each independently represent an alkylene group containing 2 or 3 carbon atoms.
< 6 > The thermoplastic resin according to the above < 4 > or < 5 >, which comprises a constituent unit derived from any one of, at least, BPEF, BNE, BNEF, and DPBHBNA.
< 7 > The thermoplastic resin according to any one of the above < 1 > to < 6 >, which comprises a constituent unit (D) derived from a monomer represented by the following general formula (5):

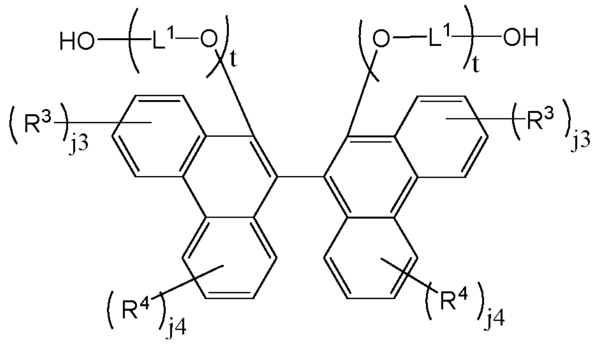

(5)

wherein

$L^1$ each independently represents a divalent linking group;
$R^3$ and $R^4$ each independently represent a halogen atom, or a substituent containing 1 to 20 carbon atoms and optionally containing an aromatic group;
j3 and j4 each independently represent an integer of 0 to 4; and
t represents an integer of 0 or 1.

< 8 > The thermoplastic resin according to the above < 7 >, wherein $R^3$ and $R^4$ in the general formula (5) each independently represent a methyl group, a phenyl group or a naphthyl group, and $L^1$ in the general formula (5) each independently represents an alkylene group containing 1 to 5 carbon atoms and optionally having a substituent.
< 9 > The thermoplastic resin according to the above < 7 > or < 8 >, wherein the monomer represented by the general formula (5) has a structure represented by the following formula (5'):

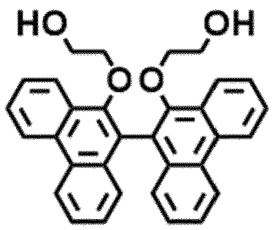

(5')

< 10 > The thermoplastic resin according to any one of the above < 1 > to < 9 >, which further comprises a constituent unit derived from at least one monomer selected from the following monomer group:

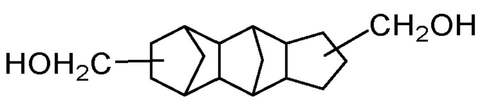

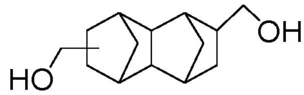

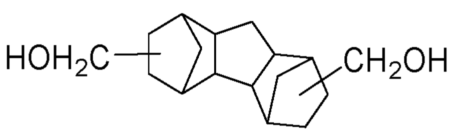

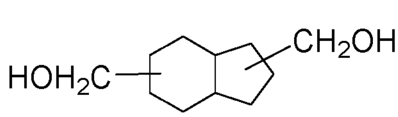

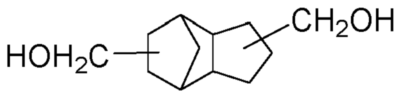
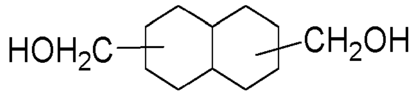

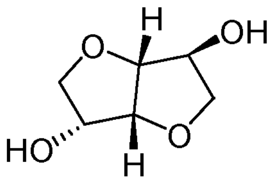
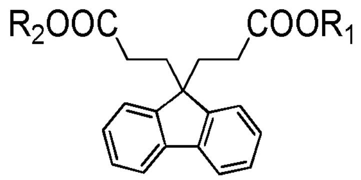

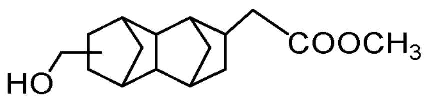
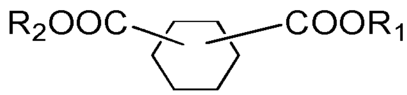

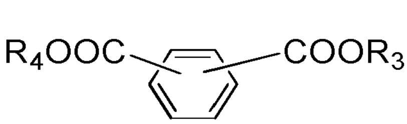
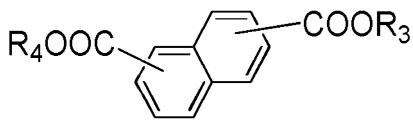

wherein $R_1$ and $R_2$ each independently represent a hydrogen atom, a methyl group or an ethyl group, $R_3$ and $R_4$ each independently represent a hydrogen atom, a methyl group, an ethyl group or alkylene glycol containing 2 to 5 carbon atoms.

< 11 > The thermoplastic resin according to any one of the above < 1 > to < 10 >, which has a polystyrene-converted weight average molecular weight (Mw) of 10,000 to 100,000.

< 12 > The thermoplastic resin according to any one of the above < 1 > to < 11 >, which has a refractive index (nD) of 1.600 to 1.750.

< 13 > The thermoplastic resin according to any one of the above < 1 > to < 12 >, which has an Abbe number (ν) of 15.0 to 23.0.

< 14 > The thermoplastic resin according to any one of the above < 1 > to < 13 >, which has a glass transition temperature of 140°C to 180°C.

< 15 > An optical lens, comprising the thermoplastic resin according to any one of the above < 1 > to < 14 >.

## Advantageous Effects of Invention

According to the present invention, there can be provided a thermoplastic resin that is excellent in optical properties such as refractive index and Abbe number, and is also excellent in heat resistance, and an optical lens using the same.

## Brief Description of Drawings

[Figure 1] Figure 1 is a view showing a chart of differential scanning calorimetry analysis of crystal I/ (crystal $\alpha$) of 10,10'-bis(ethoxycarbonylmethoxy)-9,9'-biphenanthryl (the compound represented by the formula (1a-1-2)) obtained in Synthetic Example 1.

[Figure 2] Figure 2 is a view showing a chart of powder X-ray diffraction (PXRD) measurement of crystal I / (crystal $\alpha$) of 10,10'-bis(ethoxycarbonylmethoxy)-9,9'-biphenanthryl (the compound represented by the formula (1a-1-2)) obtained in Synthetic Example 1.

## Description of Embodiments

Hereinafter, the present invention will be described in detail by exemplifying synthetic examples, examples, and the like, but the present invention is not limited to the exemplified synthetic examples, examples, and the like. The methods described below can be changed to any methods within a range that does not greatly deviate from the contents of the present invention.

< Thermoplastic resin >

One embodiment of the present invention relates to a thermoplastic resin comprising a constituent unit (A) derived from a monomer represented by the following general formula (1). The biphenanthrene compound used in the present invention is represented by the following general formula (1):

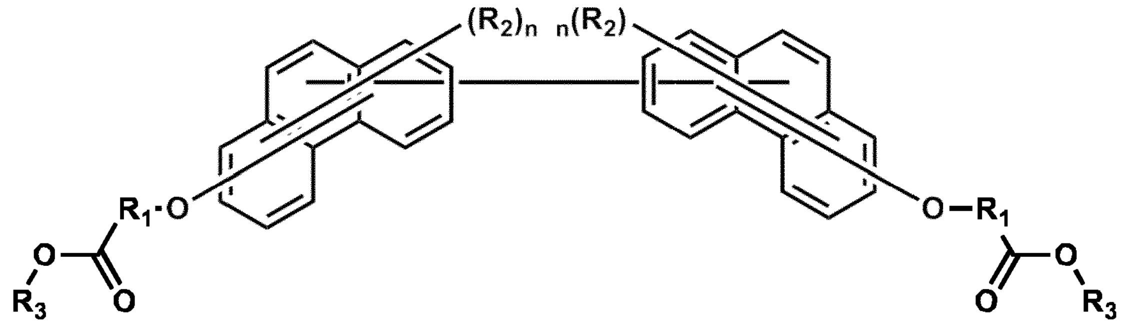

**(1)**

wherein $R_1$ each independently represents an alkylene group containing 1 to 4 carbon atoms, $R_2$ each independently represents an alkyl group containing 1 to 6 carbon atoms, an aryl group containing 6 to 18 carbon atoms or a halogen atom, n each independently represents 0 or an integer of 1 to 4, and $R_3$ each independently represents a hydrogen atom, an alkyl group containing 1 to 6 carbon atoms or an alkenyl group containing 2 to 4 carbon atoms.

The alkali metal salt of the biphenanthrene compound used in the present invention is represented by the following general formula (1'):

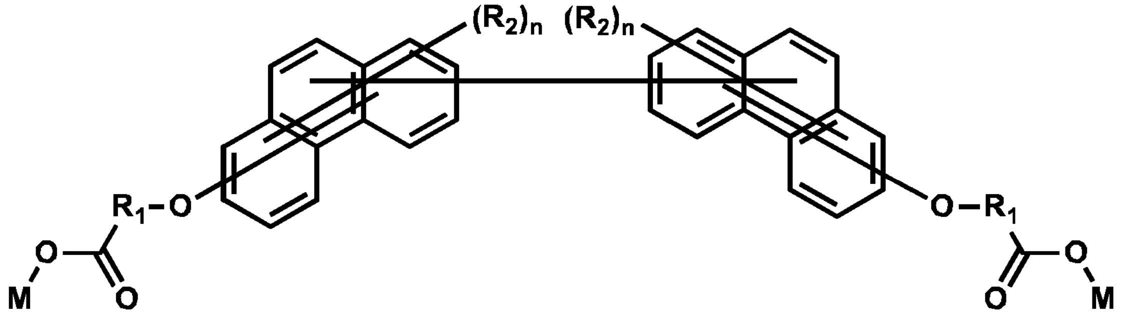

**(1')**

wherein M each independently represents an alkali metal atom; and $R_1$, $R_2$, and n are as defined in the general formula (1).

($R_1$ in general formulae (1) and (1'))

$R_1$ in the general formulae (1) and (1') each independently represents an alkylene group containing 1 to 4 carbon atom, and this alkylene group may be either a linear or branched alkylene group. Specific examples of such an alkylene group may include a methylene group, a 1,1-ethylene group, a 1,2-ethylene group, a 1,2-propylene group, a 1,3-propylene group, and a 1,4-butylene group.

$R_1$ in the general formulae (1) and (1') each independently represents, preferably an alkylene group containing 1 or 2 carbon atoms, more preferably a methylene group, a 1,1-ethylene group or a 1,2-ethylene group, further preferably a methylene group or a 1,2-ethylene group, and particularly preferably a methylene group.

($R_2$ and n in general formulae (1) and (1'))

$R_2$ in the general formulae (1) and (1') each independently represents an alkyl group containing 1 to 6 carbon atoms, an aryl group containing 6 to 18 carbon atoms, or a halogen atom. Among others, $R_2$ in the general formulae (1) and (1') preferably represents an aryl group containing 6 to 18 carbon atoms, or a halogen atom.

When $R_2$ is an alkyl group, it includes a cyclic alkyl group containing 5 or 6 carbon atoms, as well as a linear or branched alkyl group. Among others, $R_2$ each independently preferably represents an alkyl group containing 1 to 4 carbon atoms, each independently more preferably represents an alkyl group containing 1 or 2 carbon atoms, and particularly preferably represents a methyl group. When $R_2$ is an aryl group, $R_2$ each independently preferably represents an aryl group containing 6 to 12 carbon atoms, each independently more preferably represents an aryl group containing 6 to 8

carbon atoms, and particularly preferably represents a phenyl group. When $R_2$ is a halogen atom, examples of such a halogen atom may include a chlorine atom, a bromine atom, and an iodine atom.

In the general formulae (1) and (1'), n each independently represents 0 or an integer of 1 to 4. Among others, n each independently represents preferably 0, 1 or 2, each independently represents more preferably 0 or 1, and particularly preferably represents 0.

($R_3$ in general formula (1))

$R_3$ in the general formula (1) each independently represents a hydrogen atom, an alkyl group containing 1 to 6 carbon atoms, or an alkenyl group containing 2 to 4 carbon atoms.

$R_3$ preferably represents a hydrogen atom or an alkyl group containing 1 to 6 carbon atoms. When $R_3$ is an alkyl group containing 1 to 6 carbon atoms, it is preferable from the viewpoint of solubility in the solvent.

When $R_3$ is an alkyl group containing 1 to 6 carbon atoms, it includes a cyclic alkyl group containing 5 or 6 carbon atoms, as well as a linear or branched alkyl group. Among others, $R_3$ each independently preferably represents an alkyl group containing 1 to 4 carbon atoms, each independently more preferably represents an alkyl group containing 1 or 2 carbon atoms, and particularly preferably represents an ethyl group.

When $R_3$ is an alkenyl group containing 2 to 4 carbon atoms, $R_3$ each independently preferably represents an alkenyl group containing 2 or 3 carbon atoms, each independently more preferably represents a vinyl group or an allyl group, and particularly preferably represents an allyl group.

(M in general formula (1'))

M in the general formula (1') each independently represents an alkali metal atom.

M each independently preferably represents lithium, sodium or potassium, each independently more preferably represents sodium or potassium, and further preferably represents potassium.

The positions, in which the two phenanthrene rings in the general formula (1) directly bind to each other, will be explained below.

(I) Binding in position 9

When the two phenanthrene rings in the general formula (1) bind to each other in position 9, the biphenanthrene compound used in the present invention is a 9,9'-biphenanthrene compound represented by the following general formula (1a):

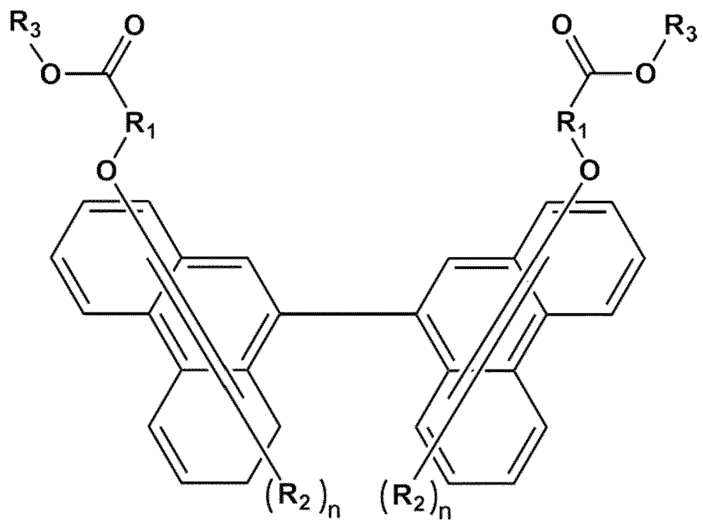

(1a)

wherein $R_1$, $R_2$, $R_3$, and n are as defined in the general formula (1).

Among the biphenanthrene compounds represented by the general formula (1a), a biphenanthrene compound represented by the following general formula (1a-1), in which the position in which two "-O-$R_1$-C(=O)-O$R_3$ groups" bind to each other is position 10, is preferable:

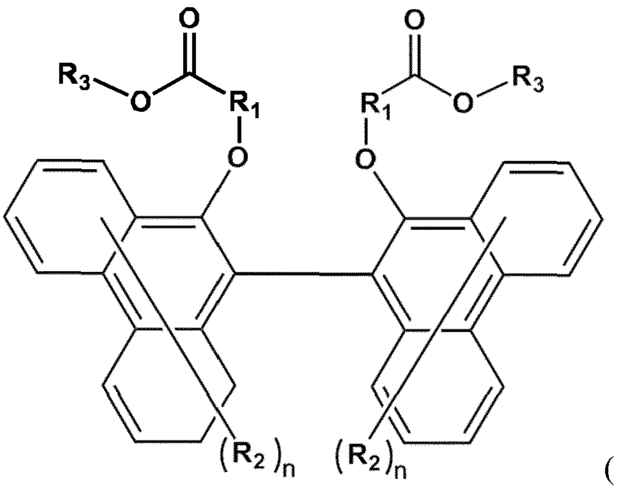

(1a-1)

wherein $R_1$, $R_2$, $R_3$, and n are as defined in the general formula (1).

Among the biphenanthrene compounds represented by the general formula (1a-1), the following compounds are preferable:

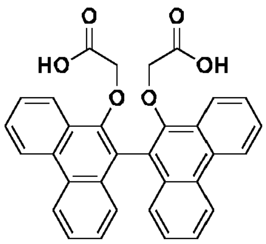

(1a-1-1)

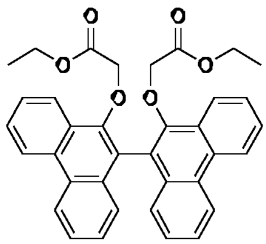

(1a-1-2)

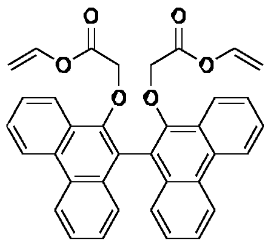

(1a-1-3)

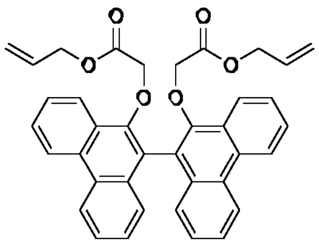

(1a-1-4)

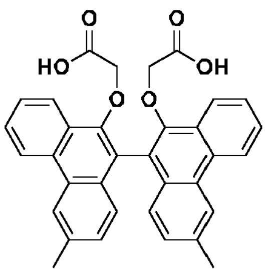

(1a-1-5)

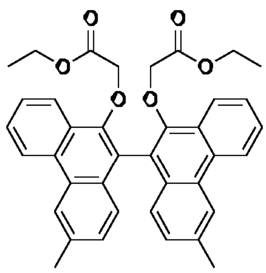

(1a-1-6)

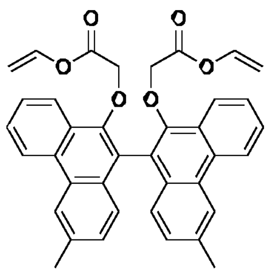

(1a-1-7)

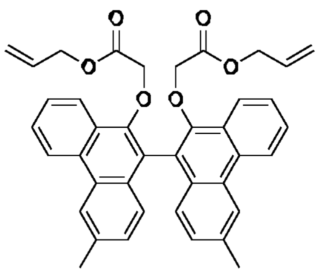

(1a-1-8)

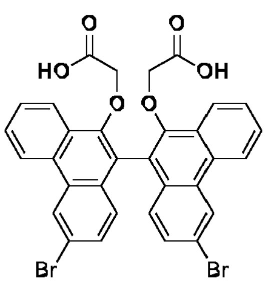

(1a-1-9)

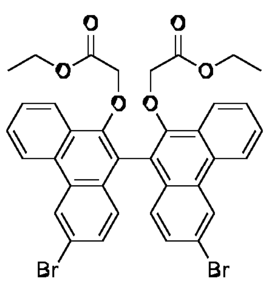

(1a-1-10)

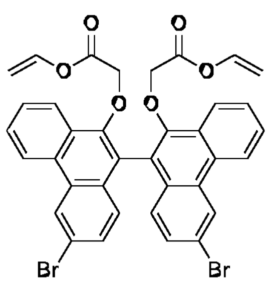

(1a-1-11)

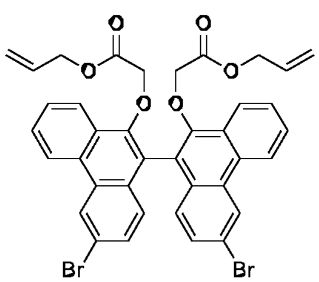

(1a-1-12)

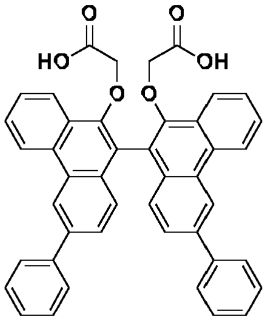
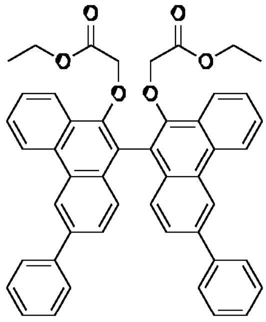
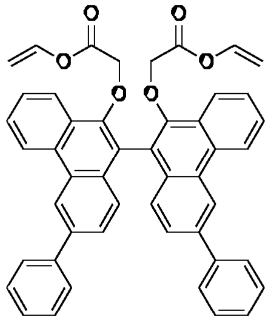
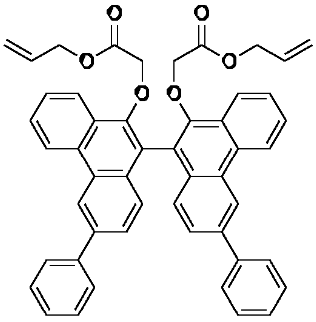

(1a-1-13) (1a-1-14) (1a-1-15) (1a-1-16)

(II) Binding in positions 1 to 4

When the two phenanthrene rings in the general formula (1) bind to each other in positions 1 to 4, the biphenanthrene compound used in the present invention is represented by the following general formula (1b):

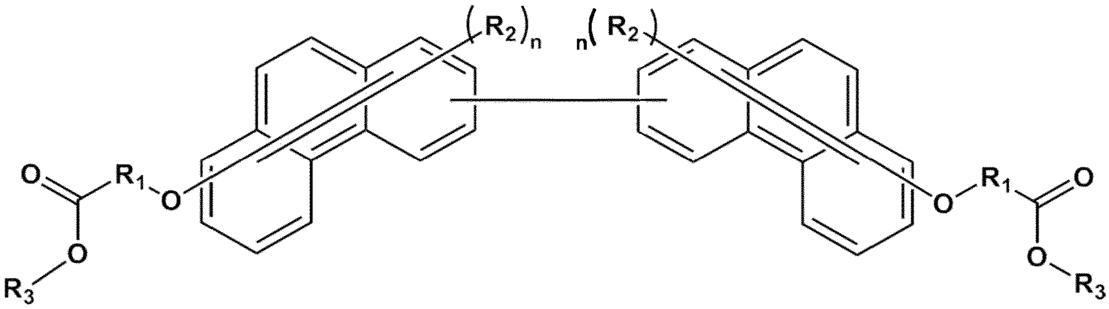

**(1b)**

wherein $R_1$, $R_2$, $R_3$, and n are as defined in the general formula (1).

Examples of the biphenanthrene compound represented by the general formula (1b) may include a group of compounds represented by the following formulae (1b-1) to (1b-4).

(1b-1) 1,1'-Biphenanthrene compounds

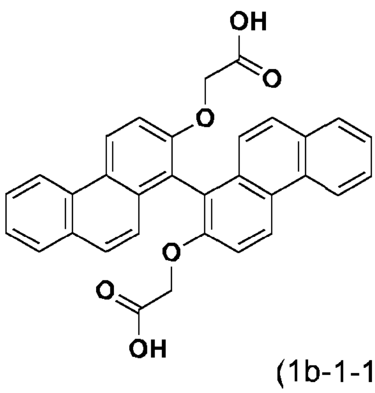

(1b-1-1)

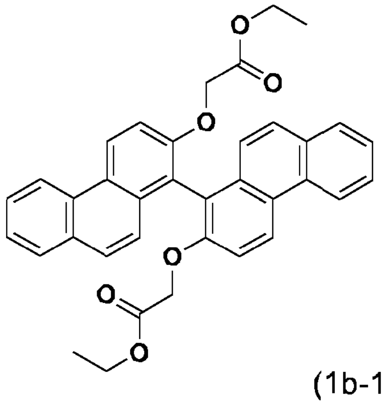

(1b-1-2)

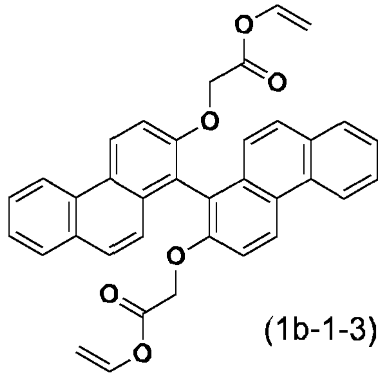

(1b-1-3)

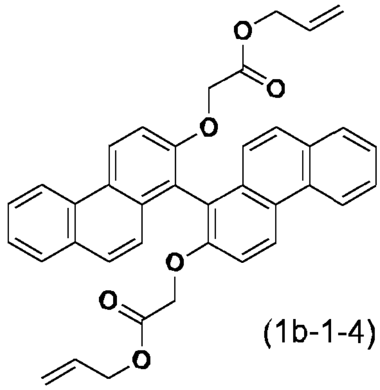

(1b-1-4)

(1b-2) 2,2'-Biphenanthrene compounds

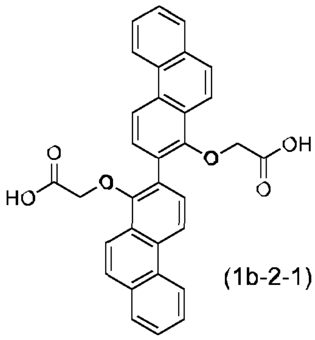

(1b-2-1)

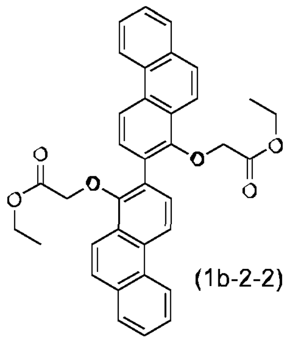

(1b-2-2)

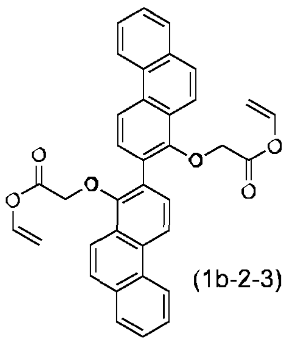

(1b-2-3)

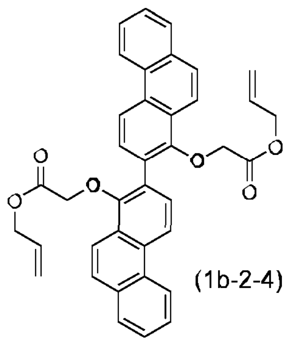

(1b-2-4)

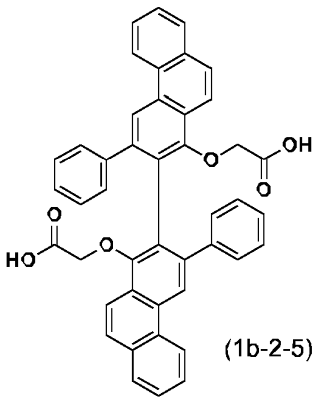

(1b-2-5)

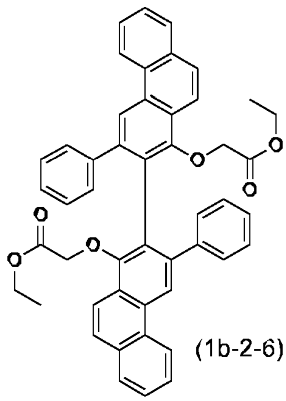

(1b-2-6)

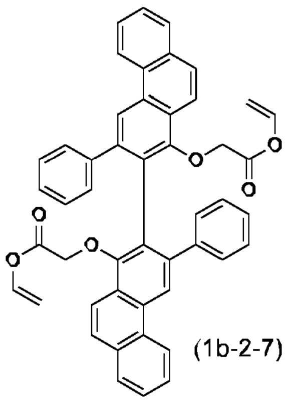

(1b-2-7)

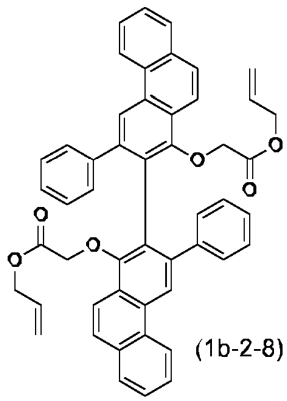

(1b-2-8)

(1b-3) 3,3'-Biphenanthrene compounds

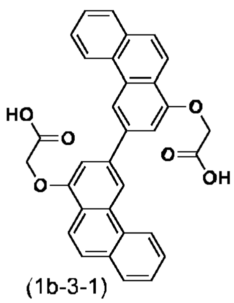

(1b-3-1)

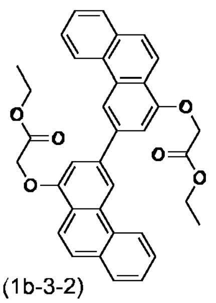

(1b-3-2)

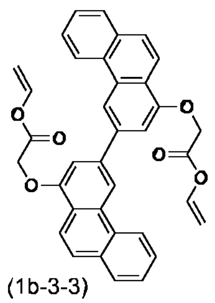

(1b-3-3)

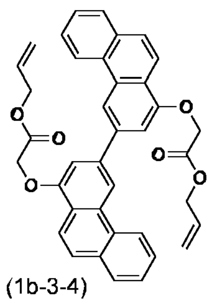

(1b-3-4)

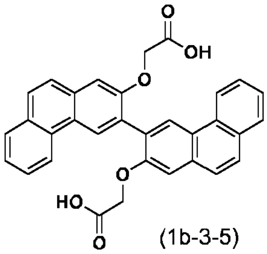
(1b-3-5)

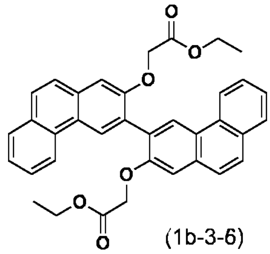
(1b-3-6)

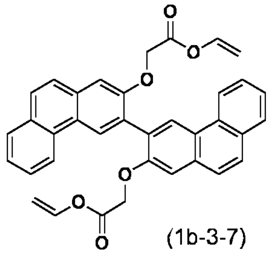
(1b-3-7)

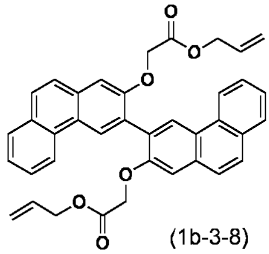
(1b-3-8)

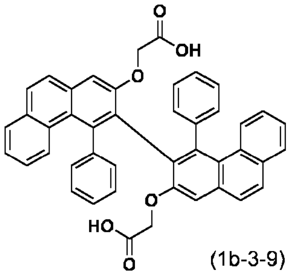
(1b-3-9)

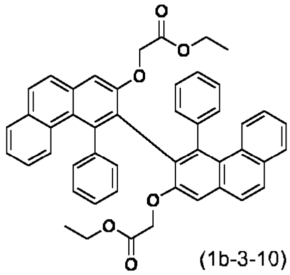
(1b-3-10)

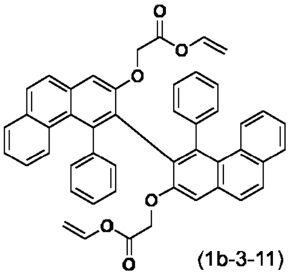
(1b-3-11)

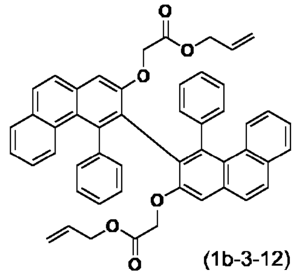
(1b-3-12)

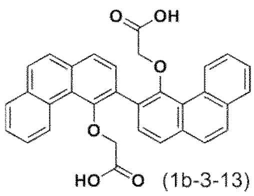
(1b-3-13)

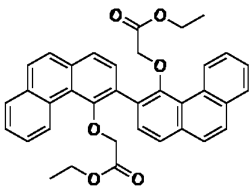
(1b-3-14)

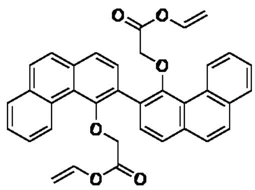
(1b-3-15)

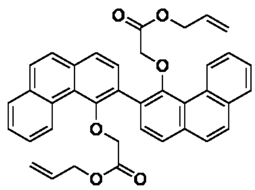
(1b-3-16)

(1b-4) 4,4'-Biphenanthrene compounds

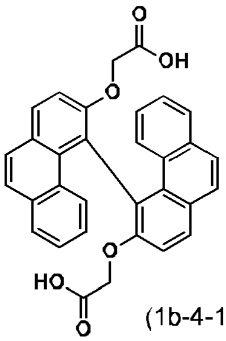
(1b-4-1)

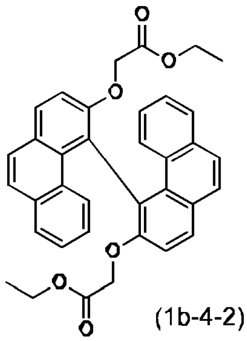
(1b-4-2)

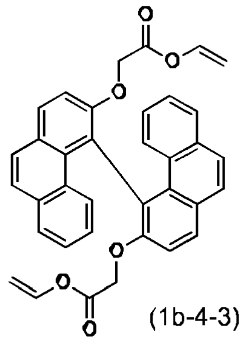
(1b-4-3)

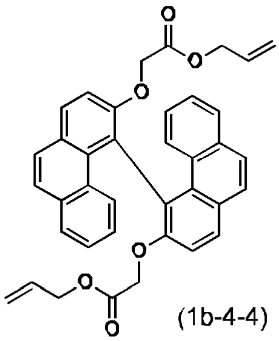
(1b-4-4)

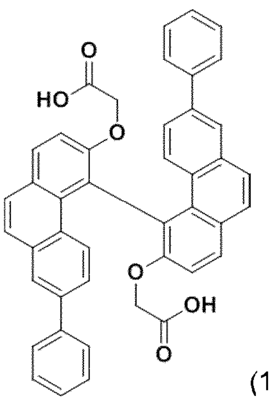
(1b-4-5)

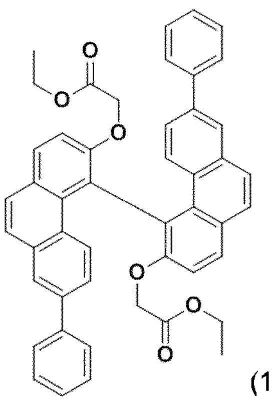
(1b-4-6)

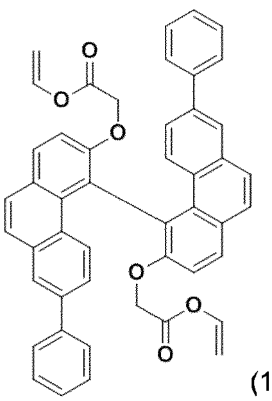
(1b-4-7)

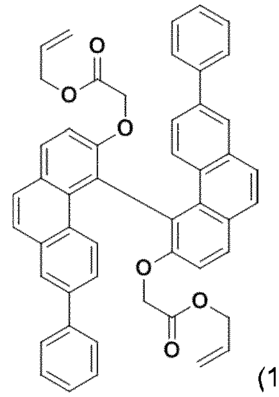
(1b-4-8)
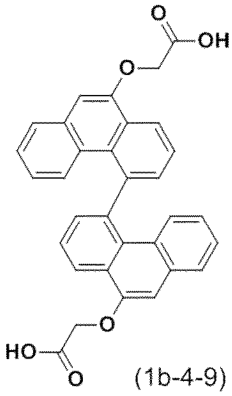
(1b-4-9)
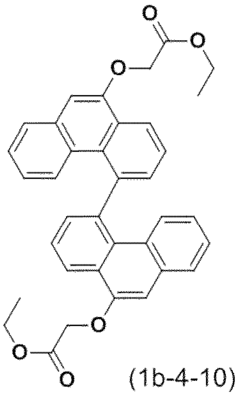
(1b-4-10)

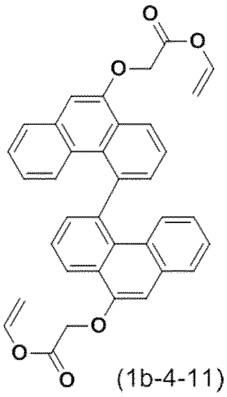
(1b-4-11)
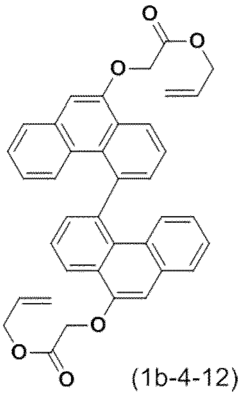
(1b-4-12)
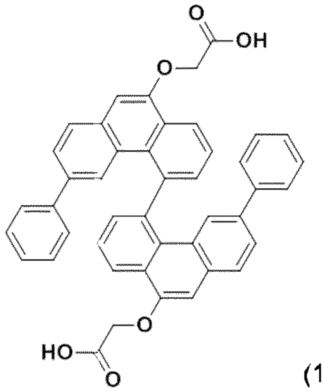
(1b-4-13)

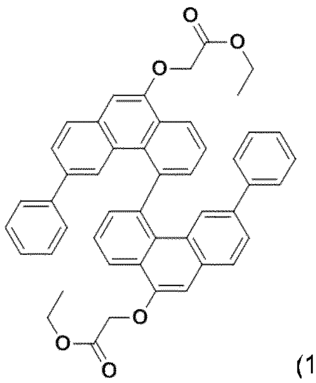
(1b-4-14)
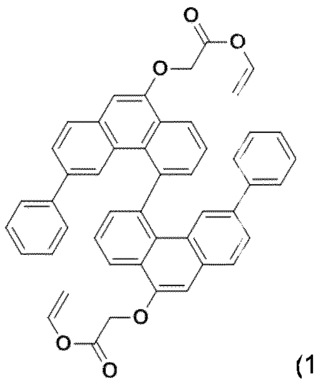
(1b-4-15)
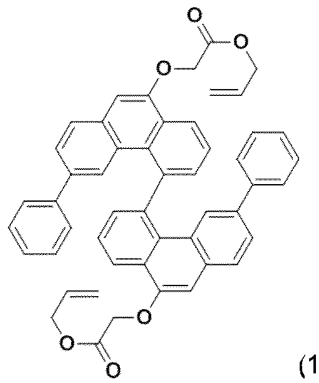
(1b-4-16)

The biphenanthrene compound used in the present invention, which is represented by the general formula (1), is preferably the biphenanthrene compound represented by the formula (1a), and is more preferably the biphenanthrene compound represented by the formula (1a-1).

< Crystal of 10,10'-bis(carboxymethoxy)-9,9'-biphenanthryl >

Among the biphenanthrene compounds in the present invention, since a crystal of 10,10'-bis(carboxymethoxy)-9,9'-biphenanthryl that is the compound represented by the formula (1a-1-1) can be treated as a solid having crystallinity and is excellent in terms of handling ability, it is extremely useful.

This crystal has characteristic diffraction peaks at the diffraction angles 2θ of 9.9±0.2°, 13.8±0.2°, 20.0±0.2°, 20.7±0.2°, 22.0±0.2° and 22.4±0.2° in the powder X-ray diffraction peak pattern using Cu-Kα rays.

< Crystal of 10,10'-bis(ethoxycarbonylmethoxy)-9,9'-biphenanthryl >

Among the biphenanthrene compounds in the present invention, since a crystal of 10,10'-bis(ethoxycarbonylmethoxy)-9,9'-biphenanthryl that is the compound represented by the formula (1a-1-2) can be treated as a solid having crystallinity and is excellent in terms of handling ability and is also excellent in term of preservation stability, having low

hygroscopicity, it is extremely useful.

< Crystal α of 10,10'-bis(ethoxycarbonylmethoxy)-9,9'-biphenanthryl >

One aspect of the crystal of 10,10'-bis(ethoxycarbonylmethoxy)-9,9'-biphenanthryl that is the compound represented by the formula (1a-1-2) is a crystal having characteristic diffraction peaks at the diffraction angles 2θ of 10.8±0.2°, 17.5±0.2°, 21.7±0.2° and 23.0±0.2° in the powder X-ray diffraction peak pattern using Cu-Kα rays. Further, this crystal preferably has diffraction peaks at the diffraction angles 2θ of 12.3±0.2°, 15.0±0.2°, 20.0±0.2° and 20.8±0.2°. Besides, these diffraction peaks preferably have a relative integrated intensity of 10 or more based on the peak with the highest integrated intensity. However, the relative integrated intensities may vary in some cases, depending on the measurement device and conditions, or in a case where the present crystal is a mixture with other crystals. Thus, the crystalline phase can be identified based on an ordinary analysis method of powder X-ray diffraction analysis. Hereinafter, this crystal is referred to as a "crystal α" at times.

With regard to this crystal α, the onset temperature of the endothermic peak measured by differential scanning calorimetry analysis is in the range of preferably 153°C to 162°C, more preferably 154°C to 160°C, and particularly preferably 155°C to 159°C. The onset temperature of the endothermic peak measured by differential scanning calorimetry (DSC) is referred to as a "melting point" at times.

< Crystal I of 10,10'-bis(ethoxycarbonylmethoxy)-9,9'-biphenanthryl >

Another aspect of the crystal of 10,10'-bis(ethoxycarbonylmethoxy)-9,9'-biphenanthryl that is the compound represented by the formula (1a-1-2) is a crystal, in which the onset temperature of the endothermic peak measured by differential scanning calorimetry analysis is in the range of 153°C to 162°C. The onset temperature is in the range of more preferably 154°C to 160°C, and particularly preferably 155°C to 159°C. Hereinafter this crystal is referred to as a "crystal I" at times. Besides, the onset temperature of the endothermic peak measured by differential scanning calorimetry (DSC) is referred to as a "melting point" at times.

< Crystal β of 10,10'-bis(ethoxycarbonylmethoxy)-9,9'-biphenanthryl >

Another aspect of the crystal of 10,10'-bis(ethoxycarbonylmethoxy)-9,9'-biphenanthryl that is the compound represented by the formula (1a-1-2) is a crystal having characteristic diffraction peaks at the diffraction angles 2θ of 10.1 ±0.2°, 10.6±0.2°, 19.0±0.2° and 25.1±0.2° in the powder X-ray diffraction peak pattern using Cu-Kα rays. Further, this crystal preferably has diffraction peaks at the diffraction angles 2θ of preferably 6.0±0.2° and 11.9±0.2°, and more preferably 9.7±0.2°, 19.7±0.2° and 22.4±0.2°. Besides, these diffraction peaks preferably have a relative integrated intensity of 10 or more based on the peak with the highest integrated intensity. However, the relative integrated intensities may vary in some cases, depending on the measurement device and conditions, or in a case where the present crystal is a mixture with other crystals. Thus, the crystalline phase can be identified based on an ordinary analysis method of powder X-ray diffraction analysis. Hereinafter, this crystal is referred to as a "crystal β" at times.

With regard to this crystal β, the onset temperature of the endothermic peak measured by differential scanning calorimetry analysis is in the range of preferably 160°C to 170°C, more preferably 164°C to 170°C, and particularly preferably 165°C to 170°C. The onset temperature of the endothermic peak measured by differential scanning calorimetry (DSC) is referred to as a "melting point" at times.

< Crystal II of 10,10'-bis(ethoxycarbonylmethoxy)-9,9'-biphenanthryl >

Another aspect of the crystal of 10,10'-bis(ethoxycarbonylmethoxy)-9,9'-biphenanthryl that is the compound represented by the formula (1a-1-2) is a crystal, in which the onset temperature of the endothermic peak measured by differential scanning calorimetry analysis is in the range of 160°C to 170°C. The onset temperature is in the range of preferably 164°C to 170°C, and particularly preferably 165°C to 170°C. Hereinafter this crystal is referred to as a "crystal II" at times. Besides, the onset temperature of the endothermic peak measured by differential scanning calorimetry (DSC) is referred to as a "melting point" at times.

With regard to the crystals (crystalα, crystal I, crystal β and crystal II) of 10,10'-bis(ethoxycarbonylmethoxy)-9,9'-biphenanthryl that is the compound represented by the formula (1a-1-2), the purity measured by high performance liquid chromatography is preferably 95.0% or more, more preferably 98.0% or more, further preferably 98.5% or more, and particularly preferably 99.0% or more.

With regard to the crystals (crystalα, crystal I, crystal β and crystal II) of 10,10'-bis(ethoxycarbonylmethoxy)-9,9'-biphenanthryl that is the compound represented by the formula (1a-1-2), the hue measured in a tetrahydrofuran solution comprising 10% by weight of the crystals is preferably APHA 250 or less, more preferably APHA 150 or less, further

preferably APHA 100 or less, and particularly preferably APHA 50 or less.

< Crystal of potassium salt of 10,10'-bis(carboxymethoxy)-9,9'-biphenanthryl >

Among the biphenanthrene compounds in the present invention, since a crystal of the potassium salt of 10,10'-bis(carboxymethoxy)-9,9'-biphenanthryl that is the compound represented by the formula (1a-1-1) can be treated as a solid having crystallinity and is excellent in terms of handling ability, it is extremely useful.
This crystal has characteristic diffraction peaks at the diffraction angles 5.4±0.2°, 10.4±0.2°, 13.4±0.2°, 17.4 ±0.2°, 20.0±0.2° and 22.0±0.2° in the powder X-ray diffraction peak pattern using Cu-Kα rays.

< Method for producing monomer >

With regard to the biphenanthrene compound (monomer) represented by the general formula (1) of the present invention, starting raw materials used in the production thereof and the production method are not particularly limited.
In the production of the biphenanthrene compound represented by the general formula (1), a biphenanthorol represented by the following general formula (2) is preferably used as a raw material. Among others, a biphenanthrol represented by the following general formula (2a) is more preferable, and a biphenanthrol represented by the following general formula (2a-1) is further preferable.

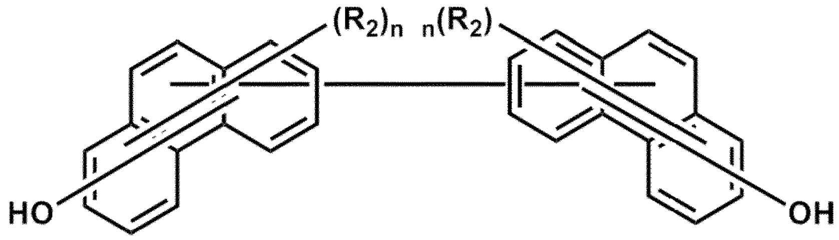

**(2)**

wherein $R_2$ and n are as defined in the general formula (1).

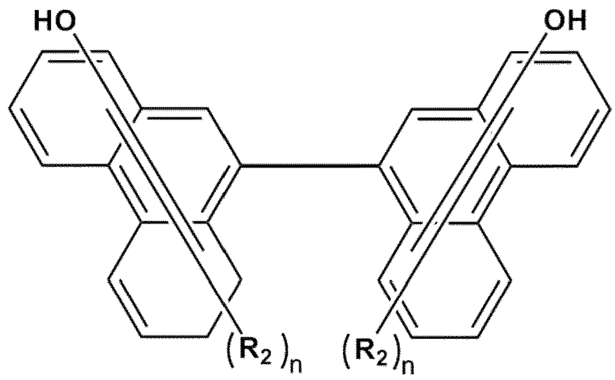

(2a)

wherein $R_2$ and n are as defined in the general formula (1).

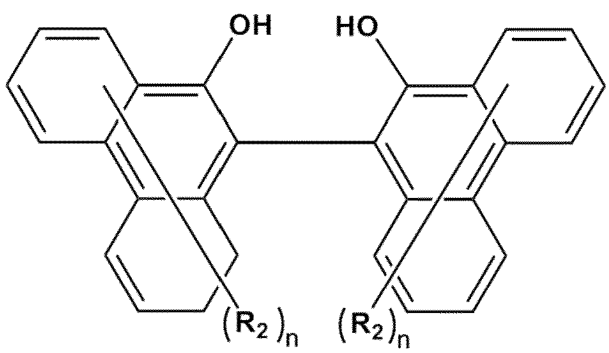

(2a-1)

wherein $R_2$ and n are as defined in the general formula (1).

The method for producing the biphenanthrene compound represented by the general formula (1) of the present invention may be, for example, a method comprising allowing a biphenanthrol represented by a general formula (2) shown below to react with a halogenated carboxylic acid represented by a general formula (3) shown below under alkaline conditions according to an etherification reaction, so as to obtain the compound represented by the general formula (1). It is assumed that the compound represented by the general formula (1) that is a compound of interest would be produced by generating, as an intermediate, a monoetherified product in which one molecule of the halogenated carboxylic acid represented by the general formula (3) is added to the biphenanthrol represented by the general formula (2) according to an etherification reaction, and then adding another molecule of the halogenated carboxylic acid represented by the general formula (3) to this monoetherified product according to an etherification reaction.

Furthermore, there may be applied a method comprising subjecting the compound represented by the general formula (1) to alkaline hydrolysis or neutralization with an alkali metal hydroxide, so as to obtain a compound represented by a general formula (1') shown below, namely, an alkali metal salt.

Also, there may be applied a method comprising subjecting the compound represented by the general formula (1') to protonation using an acid to obtain a dicarboxylic acid compound represented by the general formula (1') that corresponds to the compound of the general formula (1) wherein $R_3$ is a hydrogen atom.

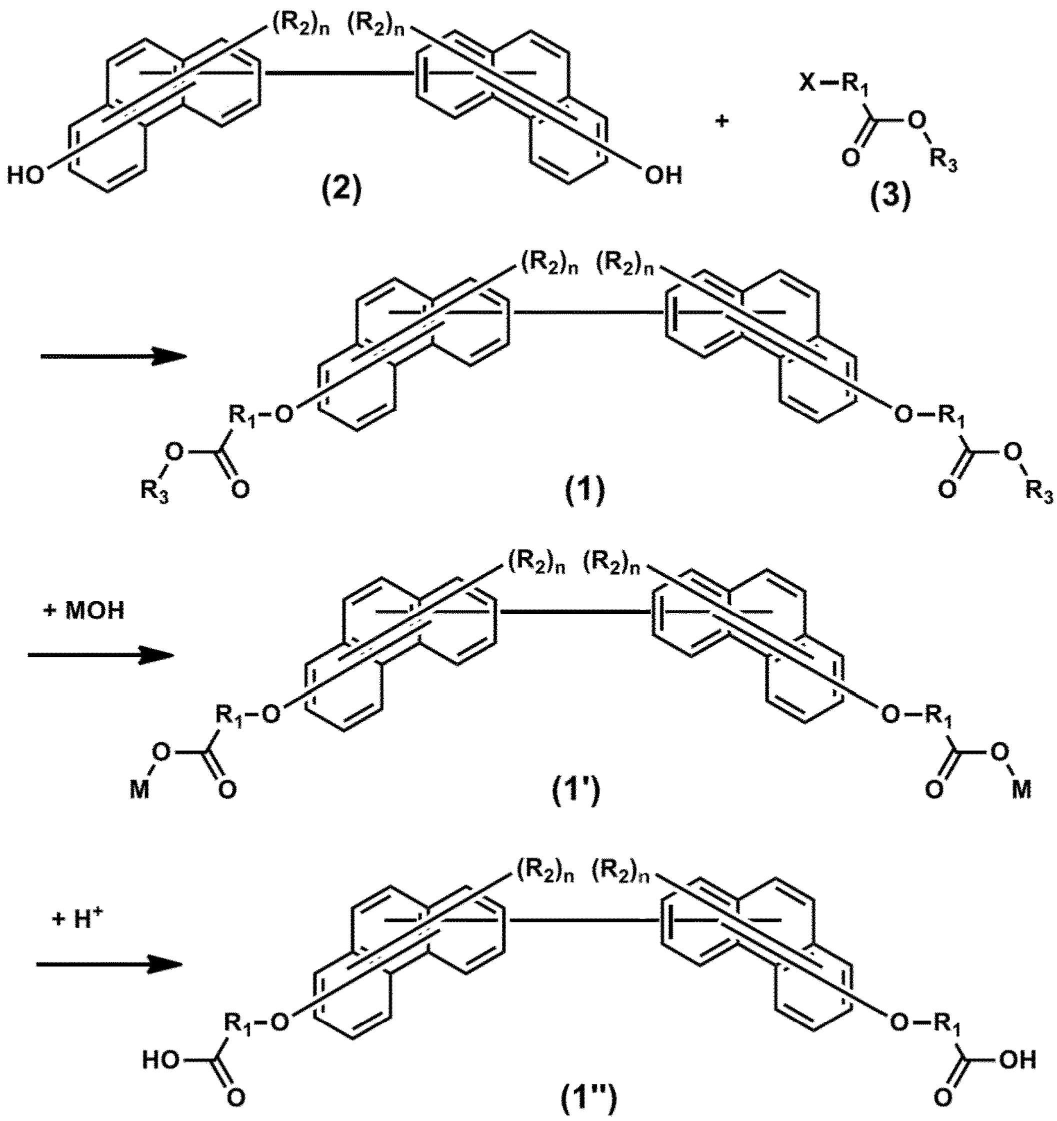


(2) (3) (1) (1') (1'')

wherein $R_1$, $R_2$, n, and $R_4$ are as defined in the general formula (1), M is as defined in the general formula (1'), X represents a halogen atom, and MOH represents an alkali metal hydroxide.

A reaction formula of the etherification reaction is shown below, in which the compound represented by the formula (1a-1-2) that is a biphenanthrene compound represented by the general formula (1) is obtained using 9,9'-biphenanthrene10,10'-diol that is a biphenanthrol represented by the general formula (2) and ethyl chloroacetate that is a

halogenated carboxylic acid represented by general formula (3).

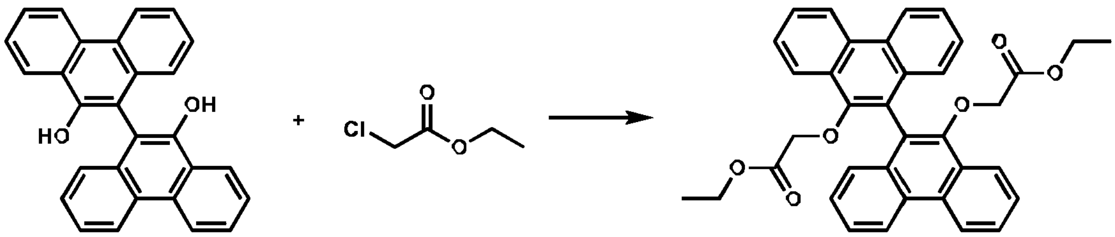

(1a-1-2)

A reaction formula of obtaining a potassium salt among alkali metal salts by using the compound represented by the formula (1a-1-2) as a compound represented by the general formula (1) and by using potassium hydroxide as an alkali metal hydroxide is shown below.

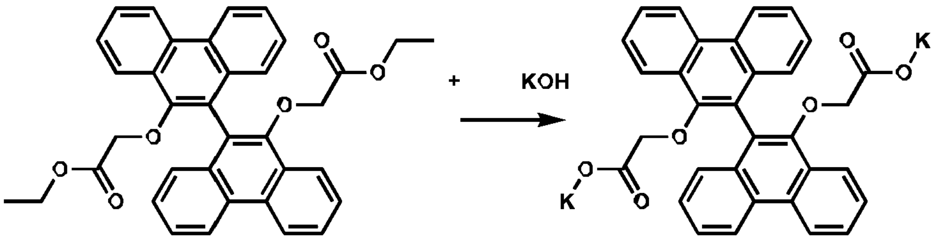


A reaction formula of obtaining a compound represented by the formula (1a-1-1) as a dicarboxylic acid compound represented by the general formula (1'), which corresponds to the compound of the general formula (1) wherein $R_3$ is a hydrogen atom, by using an acid to the obtained potassium salt, is shown below.

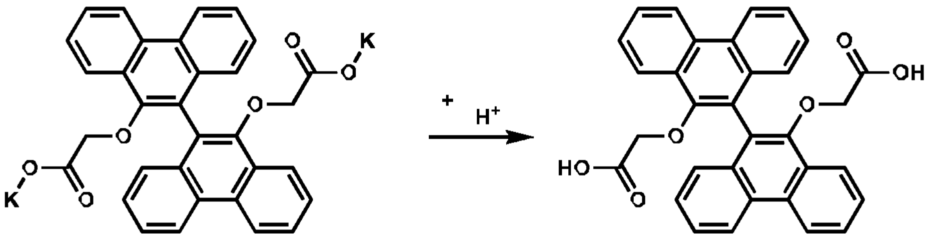


(1a-1-1)

< Raw material 1: Biphenanthrols >

In the production of the biphenanthrene compound used in the present invention, which is represented by the general formula (1), a biphenanthrol represented by the following general formula (2) is used.

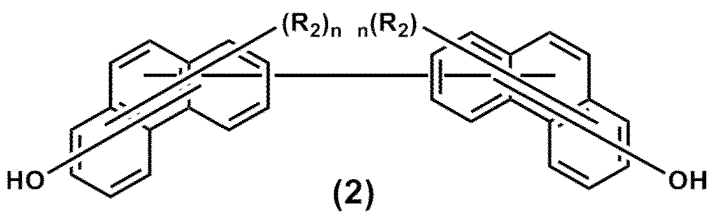

(2)

wherein $R_2$ and n are as defined in the general formula (1).

The biphenanthrol represented by the general formula (2) can be produced, for example, by the production

method described in JP Patent Publication (Kokai) No. 2001-039898 A, etc.

The biphenanthrene skeleton-containing dihydroxy compound used in the present invention, which is represented by the general formula (1a-1), can be produced using a biphenanthrol represented by the following general formula (2a-1) as a raw material.

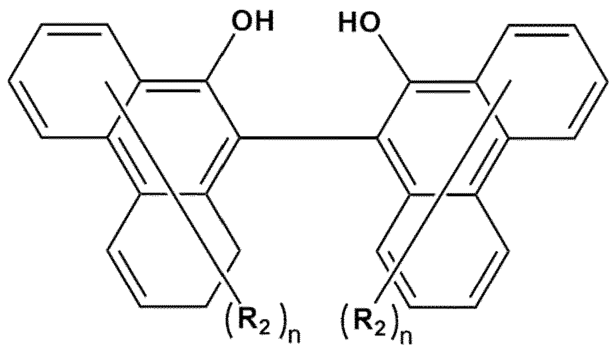

(2a-1)

wherein $R_2$ and n are as defined in the general formula (1).

The biphenanthrol represented by the general formula (2a-1) may be, for example, 10,10'-dihydroxy-9,9'-biphenanthryl (CAS Registration No.: 110071-78-8). This compound can be produced, for example, by the method described in JP Patent Publication (Kokai) No. 60-181043 (1985) A, Journal of American Chemical Society,2008,130,6840, etc. Examples of the biphenanthrol represented by the general formula (2a-1) may also include 10,10'-dihydroxy-6,6'-diphenyl-9,9'-biphenanthryl (CAS Registration No.: 1564249-14-4) and 10,10'-dihydroxy-6,6'-dibromo-9,9'-biphenanthryl (CAS Registration No.: 1564249-12-2). These compounds are described in Tetrahedron, 70, 1786-1793 (2014).

The biphenanthrene skeleton-containing dihydroxy compound used in the present invention, which is represented by the general formula (1b), can be produced using a biphenanthrol represented by the following general formula (2b) as a raw material.

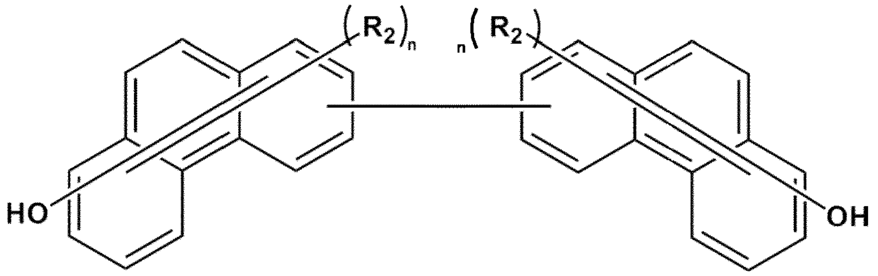

**(2b)**

The biphenanthrol represented by the general formula (2b) may be, for example, the following compound.

That is, an example may be 2,2'-dihydroxy-1,1'-biphenanthryl (CAS Registration No.: 196865-17-5), and this compound is described in Chinese Patent Application (Laid-Open) No. 103787837.

Another example may be 1,1'-dihydroxy-3,3'-diphenyl-2,2'-biphenanthryl (CAS Registration No.: 1624364-17-5), and this compound is described in Catalysis Science & Technology, 4, 4406-4415 (2014).

Other examples of the biphenanthrol represented by the general formula (2b) may include 1,1'-dihydroxy-2,2'-biphenanthryl, 1,1'-dihydroxy-3,3'-biphenanthryl, and 2,2'-dihydroxy-3,3'-biphenanthryl.

A further example may be 2,2'-dihydroxy-4,4'-diphenyl-3,3'-biphenanthryl (CAS Registration No.: 1793116-18-3), and this compound is described in Chemical Communications (Cambridge, United Kingdom), 51, 10498-10501(2015).

A further example may be 4,4'-dihydroxy-3,3'-biphenanthryl (CAS Registration No.: 2376151-04-9), and this compound is described in Chinese Patent Application (Laid-Open) No. 109336887.

A further example may be 4,4'-dihydroxy-2,2'-diphenyl-3,3'-biphenanthryl (CAS Registration No.: 200810-26-0), and this compound is described in Encyclopedia of Reagents for Organic Synthesis, 4425-4430, 2001.

A further example may be 4,4'-dihydroxy-7,7'-dimethyl-2,2'-diphenyl-3,3'-biphenanthryl (CAS Registration No.: 845253-06-7), and this compound is described in Organic Letters, 7, 367-369 (2005).

A further example may be 2,2'-bis(3,6-diphenylphenyl)-4,4'-dihydroxy-3,3'-biphenanthryl (CAS Registration No.: 1613039-61-4), and this compound is described in AngewandteChemie, International Edition, 53, 3436-3441 (2014).

A further example may be 3,3'-dihydroxy-4,4'-biphenanthryl (CAS Registration No.: 100780-04-9), and this

compound is described, for example, inJournal of the Chemical Society, Chemical Communications, 16, 1065-1066 (1985), JP Patent Publication (Kokai) No. 07-118282 A (1995), etc.

< Raw material 2: Halogenated carboxylic acids >

Examples of the halogenated carboxylic acid represented by the general formula (3) to be allowed to react with a biphenanthrol may include: halogenated alkyl acetates, such as methyl chloroacetate, ethyl chloroacetate, n-propyl chloroacetate, isopropyl chloroacetate, n-butyl chloroacetate, isobutyl chloroacetate, tertiary butyl chloroacetate, methyl bromoacetate, ethyl bromoacetate, n-propyl bromoacetate, isopropyl bromoacetate, n-butyl bromoacetate, isobutyl bromoacetate, and tertiary butyl bromoacetate; halogenated alkenyl acetates, such as vinyl chloroacetate, allyl chloroacetate, vinyl bromoacetate, and allyl bromoacetate; halogenated alkyl propanoates, such as methyl 3-chloropropanoate, ethyl 3-chloropropanoate, methyl 3-bromopropanoate, and ethyl 3-bromopropanoate; and halogenated alkenyl propanoates, such as vinyl 3-chloropropanoate, allyl 3-chloropropanoate, vinyl 3-bromopropanoate, and allyl 3-bromopropanoate.

Among these, alkyl halogenated acetate or alkenyl halogenated acetate is preferable; methyl chloroacetate, ethyl chloroacetate, methyl bromoacetate, ethyl bromoacetate, vinyl chloroacetate, and allyl chloroacetate are more preferable; methyl chloroacetate, ethyl chloroacetate, methyl bromoacetate, and ethyl bromoacetate are further preferable; and methyl chloroacetate and ethyl chloroacetate are particularly preferable.

< Reaction conditions, etc. of etherification reaction >

The molar ratio of a halogenated carboxylic acid added to a biphenanthrol is not particularly limited, as long as it is the theoretical value (2.0) or higher. **In** general, the halogenated carboxylic acid is used in the range of 2 to 20 times molar amount, preferably in the range of 2 to 10 times molar amount, and more preferably in the range of 2 to 6 times molar amount.

The reaction is carried out in the presence of a base, and examples of the base used may include triethylamine, pyridine, sodium hydroxide, potassium hydroxide, sodium carbonate, potassium carbonate, sodium hydrogen carbonate, and potassium hydrogen carbonate. Among these bases, sodium carbonate and potassium carbonate are preferable. With regard to the molar ratio of the base added to the halogenated carboxylic acid, the base is used generally in the range of 0.8 to 4 times molar amount, preferably in the range of 0.85 to 3 times molar amount, and more preferably in the range of 0.9 to 2 times molar amount.

In addition, a catalyst may be used, and examples of such a catalyst may include alkali metal salt bromides such as sodium bromide and potassium bromide, alkali metal salt iodides such as sodium iodide and potassium iodide, ammonium bromide, and ammonium iodide. With regard to the amount of a catalyst used, the catalyst is used to the biphenanthrol generally in the range of 0.1% to 100% by weight, preferably in the range of 0.1% to 20% by weight, and more preferably in the range of 0.1% to 10% by weight.

The reaction temperature is in the range of generally 25°C to 120°C, preferably 40°C to 100°C, more preferably 50°C to 90°C, and particularly preferably 60°C to 80°C. If the reaction temperature is too high, the yield will unfavorably decrease. On the other hand, if the temperature is too low, the reaction rate will unfavorably decrease.

The reaction pressure is not limited, and the reaction may be carried out under normal, reduced, or increased pressure. Normal pressure or reduced pressure is preferable. In the case of the reaction under increased pressure, the reaction can be carried out, for example, under pressurized conditions in which gas inactive to the reaction, such as nitrogen, is circulated. By doing so, carbon dioxide gas generated from the carbonate or bicarbonate used in the reaction can be discharged out of the reaction system, so that the reaction can be promoted.

From the viewpoint of shortening the reaction time, it is more preferable to conduct the reaction under reduced pressure. By conducting the reaction under reduced pressure, the carbon dioxide gas generated from the carbonate or bicarbonate used in the reaction can be discharged out of the reaction system, and thus, the reaction can be promoted, so that the reaction time can be shortened compared with the reaction under normal pressure. Furthermore, the reaction is carried out under reduced pressure, and at the same time, the solvent is distillated from the reaction system, so that generation of byproducts can be suppressed. Specifically, the reaction pressure is preferably in the range of 5 kPa or more and 80 kPa or less, more preferably in the range of 10 kPa or more and 80 kPa or less, and further preferably in the range of 30 kPa or more and 60 kPa or less. The reaction pressure can be decreased to reduced pressure by using a pressure reducing device. When the reaction pressure is maintained in the above-described range, the pressure reducing device may be operated intermittently or continuously, but continuous operation is more preferable.

Upon the reaction, a reaction solvent may not be used, but it is preferable to use the reaction for reasons such as operability during industrial production and the improvement of the reaction rate. The reaction solvent is not particularly limited, as long as it does not distillate from the reaction vessel at the reaction temperature and is inactive to the reaction. Examples of the reaction solvent may include: ketones, such as acetone, methyl ethyl ketone, methyl isobutyl ketone, and

cyclohexanone; ethers, such as tetrahydrofuran, 1,4-dioxane, 1,3-dioxane, and diethoxyethane; nonprotic polar solvents, such as acetonitrile, dimethyl sulfoxide, dimethyl formamide, and N-methylpyrrolidone; and aromatic hydrocarbon solvents, such as toluene, xylene, and mesitylene. These organic solvents may be used each alone, or may also be used in combination of two or more types, as appropriate, in order to adjust polarity. Among these solvents, ketone solvents containing 3 to 9 carbon atoms, such as acetone, methyl ethyl ketone, methyl isobutyl ketone, cyclopentanone, cyclohexanone, cycloheptanone and cyclooctanone, or nonprotic polar solvents such as acetonitrile, dimethyl sulfoxide, dimethylformamide and **N-**methylpyrrolidone are preferable; a ketone solvent containing 3 to 8 carbon atoms or acetonitrile is more preferable; a ketone solvent containing 3 to 6 carbon atoms or acetonitrile is further preferable; and methyl isobutyl ketone is particularly preferable. When methyl isobutyl ketone is used as a reaction solvent, it is also preferable because it can be used in water washing for removing water-soluble impurities such as salts.

The amount of a solvent used is not particularly limited, as long as it does not interfere with the reaction. In general, the solvent is used to a biphenanthrol, preferably in the range of 1 to 7 times by weight of the biphenanthrol, more preferably in the range of 2 to 4 times by weight thereof, and further preferably in the range of 2 to 3 times by weight thereof.

When the reaction is carried out under reduced pressure and the reaction is also carried out by allowing the solvent to distillate from the reaction system, the amount of the solvent used to a biphenanthrol is preferably in the range of 1.5 to 10 times by weight of the biphenanthrol, more preferably in the range of 2 to 8 times by weight thereof, and further preferably in the range of 2 to 6 times by weight thereof.

When the reaction is carried out by distillation of the solvent from the reaction system, the amount of the solvent distillated per hour is preferably in the range of 0.05 to 1.5 times by weight of a biphenanthrol, more preferably in the range of 0.1 to 1.0 time weight thereof, further preferably in the range of 0.3 to 1.0 times by weight thereof, and particularly preferably in the range of 0.3 to 0.8 times by weight thereof. During the reaction, the amount of the solvent distillated per hour may fluctuate within the above-described range, or the amount of the solvent distillated may temporarily exceed the upper or lower limit value of the above-described range.

The endpoint of the reaction can be confirmed by liquid chromatography or gas chromatography analysis. The endpoint of the reaction is preferably defined to be the time point at which unreacted biphenanthrol disappears and an increase in the product of interest is no longer observed, or the time point at which unreacted biphenanthrol disappears and a monoetherified product as a reaction intermediate is generated and is then almost no longer observed. The time point, at which the monoetherified product as a reaction intermediate is almost no longer observed after it has been generated, is specifically a time point at which the monoetherified product becomes 1.5% by or less in the above-described analysis of the monoetherified product, more preferably a time point at which the monoetherified product becomes 1.0% by or less, further preferably a time point at which the monoetherified product becomes 0.8% by or less, and particularly preferably a time point at which the monoetherified product becomes 0.5% by or less. The reaction time is different depending on the reaction conditions such as reaction temperature, but the reaction is generally terminated after about 1 to 30 hours.

Upon the production of the biphenanthrene compound in the present invention, the water content in the reaction solution in the above-described etherification reaction is preferably set to be in the range of 0.01% by weight or more and 2.0% by weight or less with respect to the biphenanthrol. By setting the water content in the reaction solution within the above-described range, the biphenanthrene compound in the present invention can be produced with a good reaction yield. The upper limit value of the water content is more preferably 1.5% by weight or less, further preferably 1.0% by weight or less, and particularly preferably 0.5% by weight or less. Examples of the method of setting the water content in the reaction solution within the aforementioned range may include a method of using previously dehydrated raw materials and solvents, and a method of removing by distillation before the etherification reaction.

When the biphenanthrene compound represented by the general formula (1) in the present invention is an ester compound, it can be purified and isolated by performing post-treatment operations such as neutralization, washing with water, crystallization, filtration, distillation, and separation by column chromatography, etc. according to ordinary methods, after completion of the etherification reaction. In order to further enhance purity, the reaction product may be subjected to distillation, recrystallization, or purification by column chromatography according to ordinary methods. After completion of the etherification reaction, the reaction mixture is preferably neutralized and washed with water, followed by performing crystallization operations.

< Method for producing crystal I and/or crystal α of 10,10'-bis(ethoxycarbonylmethoxy)-9,9'-biphenanthryl >

As a method for producing crystal I and/or crystal α of 10,10'-bis(ethoxycarbonylmethoxy)-9,9'-biphenanthryl that is the compound represented by the formula (1a-1-2), among the biphenanthrene compounds in the present invention, there is a method of crystallizing the crystal from a solution comprising 10,10'-bis(ethoxycarbonylmethoxy)-9,9'-biphenanthryl and at least one solvent selected from an aromatic hydrocarbon solvent containing 6 to 9 carbon atoms and a ketone solvent containing 3 to 9 carbon atoms.

There is no particular restriction on 10,10'-bis(ethoxycarbonylmethoxy)-9,9'-biphenanthryl used, but as mentioned above, the compound subjected to post-treatment operations according to ordinary methods after completion of the

etherification reaction can be used.

Specific examples of the aromatic hydrocarbon solvent containing 6 to 9 carbon atoms may include benzene, toluene, xylene, and mesitylene. Among others, an aromatic hydrocarbon solvent containing 7 to 9 carbon atoms is preferable, an aromatic hydrocarbon solvent containing 7 or 8 carbon atoms is more preferable, and toluene is particularly preferable.

Specific examples of the ketone solvent containing 3 to 9 carbon atoms may include chain ketone solvents such as acetone, methyl ethyl ketone, methyl isobutyl ketone and methyl isoamyl ketone, and cyclic ketone solvents such as cyclopentanone, cyclohexanone, cycloheptanone and isophorone. Among these, a chain ketone solvent containing 3 to 9 carbon atoms is preferable; a chain ketone solvents containing 3 to 6 carbon atoms is more preferable; and acetone or methyl isobutyl ketone is particularly preferable.

The amount of the above-described organic solvent used can be adjusted, as appropriate, considering the solubility caused by the type of the organic solvent used. The amount of the organic solvent used is in the range of 0.5 to 10 times by weight with respect to the amount of the compound represented by the formula (1a-1-2), and the amount of the organic solvent used is more preferably in the range of 1 to 8 times by weight, further preferably in the range of 1 to 6 times by weight, and particularly preferably 1.5 to 4 times by weight.

The temperature at which the compound represented by the formula (1a-1-2) is dissolved in an organic solvent to form a solution can be adjusted, as appropriate, considering the type of the organic solvent used, but it is in the range of 40°C to 90°C.

As operations applied upon precipitating crystals in the present crystallization method, the following operations can be carried out: an operation of precipitating crystals during the reaction of allowing 10,10'-dihydroxy-9,9'-biphenanthryl to react with ethyl chloroacetate to synthesize the compound represented by the formula (1a-1-2), an operation of mixing into the solution a poor solvent in which the solubility of the compound represented by the formula (1a-1-2) is low, an operation of cooling the solution, an operation of removing the solvent from the solution by distillation or the like. Among these operations, the operation of mixing a poor solvent or the operation of cooling the solution is preferable.

Examples of the poor solvent used in the case of precipitating crystals by the operation of mixing the poor solvent may include water, an alcohol solvent containing 1 to 4 carbon atoms, and aliphatic hydrocarbon solvent containing 5 to 8 carbon atoms. The poor solvent to be mixed is at least one type selected from these solvents, and it is preferable to select one type from these solvents.

Specific examples of the alcohol solvent containing 1 to 4 carbon atoms may include methanol, ethanol, 1-propanol, 2-propanol, and 1-butanol. Among others, an alcohol solvent containing 1 to 3 carbon atoms is preferable, an alcohol solvent containing 1 or 2 carbon atoms is more preferable, and methanol is particularly preferable. Specific examples of the aliphatic hydrocarbon solvent containing 5 to 8 carbon atoms may include: chain aliphatic hydrocarbon solvents containing 5 to 8 carbon atoms, such as pentane, hexane, heptane, octane, and isooctane; and cyclic aliphatic hydrocarbon solvents containing 5 to 8 carbon atoms, such as cyclopentane, cyclohexane, and cycloheptane. Among these, a chain aliphatic hydrocarbon solvent containing 5 to 8 carbon atoms is preferable; a chain aliphatic hydrocarbon solvent containing 6 to 8 carbon atoms is more preferable; a chain aliphatic hydrocarbon solvent containing 7 carbon atoms is further preferable; and normal heptane is particularly preferable.

The amount of the above-described poor solvent used can be adjusted, as appropriate, considering the amount of the solution of the compound represented by the formula (1a-1-2), the type of the organic solvent, and the solubility caused by the type of the poor solvent used. The amount of the poor solvent used is in the range of 0.5 to 10 times by weight, with respect to the amount of the compound represented by the formula (1a-1-2), and the amount of the poor solvent used is more preferably in the range of 1 to 8 times by weight, further preferably in the range of 1 to 6 times by weight, and particularly preferably in the range of 1.5 to 4 times by weight.

The temperature at which the crystals of the compound represented by the formula (1a-1-2) are precipitated by the operation of mixing a poor solvent is not particularly limited, and it is in the range of 20°C to 85°C.

When the crystals are precipitated by the operation of cooling the solution of the compound represented by the formula (1a-1-2), before the cooling of the solution , the poor solvent used in the case of precipitating crystals by the above-described operation of mixing the poor solvent may be mixed with respect to the solution of the compound represented by the formula (1a-1-2).

The temperature at which the crystals are precipitated by cooling the solution of the compound represented by the formula (1a-1-2) is not particularly limited, and it is in the range of 10°C to 80°C, after the solution is cooled from the temperature at which the compound is dissolved in the organic solvent to form the solution.

When the crystals are precipitated, it is not necessary to use a seed crystal, but a method of using a seed crystal is preferable. There is no restriction on the crystal to be used as such a seed crystal. In the case of producing crystal I and/or crystal $\alpha$, the crystal I and/or the crystal $\alpha$ are preferably used, and a crystal precipitated without seed crystals may be used as a seed crystal.

< Method for producing crystal II and/or crystal β of 10,10'-bis(ethoxycarbonylmethoxy)-9,9'-biphenanthryl >

As a method for producing crystal II and/or crystal β of 10,10'-bis(ethoxycarbonylmethoxy)-9,9'-biphenanthryl that is the compound represented by the formula (1a-1-2), among the biphenanthrene compounds in the present invention, there is a method of heating the crystal of 10,10'-bis(ethoxycarbonylmethoxy)-9,9'-biphenanthryl to a temperature of 150°C or higher and 165°C or lower, so as to melt it, and then cooling it.

The crystal of 10,10'-bis(ethoxycarbonylmethoxy)-9,9'-biphenanthryl used is preferably crystal I or crystal α. The purity of the crystal measured by high performance liquid chromatography is preferably 95.0% or more, more preferably 98.0% or more, further preferably 98.5% or more, and particularly preferably 99.0% or more.

The temperature range applied upon heating is preferably 150°C or higher and 163°C or lower, and more preferably 150°C or higher and 160°C or lower. The cooling temperature is not particularly limited, as long as the compound is crystallized to form a solid. The compound may also be cooled at normal temperature. When 10,10'-bis(ethoxycarbonylmethoxy)-9,9'-biphenanthryl is heated to be melted, it is preferable that there be no residual crystal of the 10,10'-bis(ethoxycarbonylmethoxy)-9,9'-biphenanthryl that is not melted.

The alkali metal salt of the biphenanthrene compound represented by the general formula (1') in the present invention can be obtained by performing a post-reaction treatment such as neutralization and washing with water, after completion of the above-described etherification reaction, and then subjecting the obtained ester compound as a crude product to alkaline hydrolysis without purification thereof. The alkali compound used in the alkaline hydrolysis is not particularly limited, and alkali metal hydroxides such as sodium hydroxide or potassium hydroxide are preferable. The alkali compound is usually used as an aqueous solutions with a concentration of 12% to 60% by weight. In addition, such an alkali compound is used in the range of generally 2 moles or more, and preferably 2.1 to 10 moles, with respect to 1 mole of the ester compound of the biphenanthrene compound represented by the general formula (1). **In** general, water is used as a reaction solvent in the hydrolysis reaction, but as necessary, an organic solvent such as alcohol and ketone that is to be miscible with water at any ratio, or a mixed solvent of such an organic solvent and water, is also used. Moreover, the reaction solvent used in the above-described etherification, such as methyl isobutyl ketone or acetonitrile, can also be used. The reaction temperature applied in the hydrolysis is generally in the range of 30°C to 100°C, and preferably in the range of 50°C to 90°C. Under such reaction conditions, the reaction is generally completed in about 1 to 5 hours.

Among the biphenanthrene compounds in the present invention, the crystal of the potassium salt of 10,10'-bis(carboxymethoxy)-9,9'-biphenanthryl that is the compound represented by the formula (1a-1-1) can be produced by precipitating the potassium salt crystal by the aforementioned method, using, for example, potassium hydroxide as an alkali compound used in the alkaline hydrolysis.

When the biphenanthrene compound represented by the general formula (1) is a carboxylic acid compound (i.e. the compound represented by the general formula (1")), it can be obtained by a method comprising subjecting the ester compound obtained by the etherification reaction to alkaline hydrolysis, and then acidifying the reaction solution by using a strong acid such as, for example, hydrochloric acid. This method is preferably applied to obtain a highly pure carboxylic acid compound. The obtained compound can be purified and isolated by performing post-treatment operations such as neutralization, washing with water, crystallization, filtration, distillation, and separation by column chromatography, according to ordinary methods.

In order to obtain a highly pure carboxylic acid compound, it is preferable to apply a production method comprising distilling away alcohol generated by the hydrolysis of the ester from the reaction system after completion of the alkaline hydrolysis reaction, and then acidifying the reaction solution, or a production method comprising once removing carboxylate from the reaction mixture after the alkaline hydrolysis of the ester compound obtained by the etherification reaction, and then obtaining a carboxylic acid compound using the carboxylate and acid.

Among the biphenanthrene compounds in the present invention, the crystal of 10,10'-bis(carboxymethoxy)-9,9'-biphenanthryl that is the compound represented by the formula (1a-1-1) can be produced by performing post-treatment operations of crystallization. Specifically, there is, for example, a method of precipitation the crystal from a solution comprising 10,10'-bis(carboxymethoxy)-9,9'-biphenanthryl and at least one type of solvent selected from an aromatic hydrocarbon solvent containing 6 to 9 carbon atoms and a ketone solvent containing 3 to 9 carbon atoms. As a solvent, a ketone solvent containing 3 to 9 carbon atoms is preferably used, a chain ketone solvent containing 3 to 9 carbon atoms is more preferable used, a chain ketone solvent containing 3 to 6 carbon atoms is further preferable, and acetyl or methyl isobutyl ketone is particularly preferable. The operation of precipitating the crystal may be the operation of mixing a poor solvent in which the solubility of the compound represented by the formula (1a-1-1) is low, the operation of cooling the solution, or the operation of removing the solvent from the solution by distillation or the like.

Individual steps such as reaction, alkaline hydrolysis, neutralization, washing with water, crystallization, filtration, distillation, separation by column chromatography, drying and packing are preferably carried out under an inert gas atmosphere such as nitrogen or argon, in order to suppress oxidation, deterioration, coloration etc. due to the effects of oxygen.

The thermoplastic resin of one embodiment of the present invention is not particularly limited, and examples

thereof may include a polyester resin, a polyester carbonate resin, an epoxy resin, a polyurethane resin, a polyacrylic acid ester resin, and a polymethacrylic acid ester resin. The thermoplastic resin of one embodiment of the present invention is preferably a polyester carbonate resin or a polyester resin.

In the thermoplastic resin of one embodiment of the present invention, the ratio of the constituent unit (A) represented by the above formula in all constituent units is not particularly limited. The ratio of the constituent unit (A) is preferably 1 to 80 mole %, more preferably 1 to 60 mole %, and particularly preferably 5 to 50 mole %, in all constituent units.

That is to say, the thermoplastic resin of one embodiment of the present invention may comprise constituent units derived from aliphatic dihydroxy compounds and constituent units derived from aromatic dihydroxy compounds, which are generally used as constituent units of polycarbonate resins or polyester carbonate resins, in addition to the constituent unit (A) represented by the above-described formula.

Specifically, the aliphatic dihydroxy compound includes various compounds, and particular examples thereof may include ethylene glycol, 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

The aromatic dihydroxy compound includes various compounds, and particular examples thereof may include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, and bis(4-hydroxyphenyl)ketone, and bisphenoxyethanol fluorene.

Moreover, the thermoplastic resin of one embodiment of the present invention preferably comprises a constituent unit (B) derived from a monomer represented by the following general formula (6).

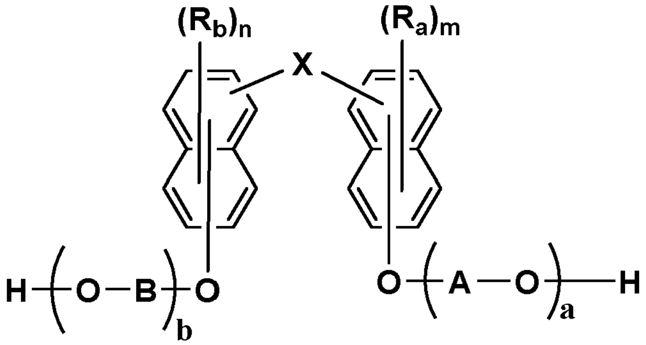

(6)

In the general formula (6), $R_a$ and $R_b$ are each independently selected from the group consisting of a halogen atom, a C1-C20 alkyl group optionally having a substituent, a C1-C20 alkoxy group optionally having a substituent, a C5-C20 cycloalkyl group optionally having a substituent, a C5-C20 cycloalkoxy group optionally having a substituent, a C6-C20 aryl group optionally having a substituent, a C6-C20 heteroaryl group optionally having a substituent, which contains one or more heterocyclic atoms selected from O, N and S, a C6-C20 aryloxy group optionally having a substituent, and $-C\equiv C-R_h$. Herein, $R_h$ represents a C6-C20 aryl group optionally having a substituent, or a C6-C20 heteroaryl group optionally having a substituent, which contains one or more heterocyclic atoms selected from O, N and S.

$R_a$ and $R_b$ are preferably a hydrogen atom, a C6-C20 aryl group optionally having a substituent, or a C6-C20 heteroaryl group optionally having a substituent, which contains one or more heterocyclic atoms selected from O, N and S; more preferably a hydrogen atom or a C6-C20 aryl group optionally having a substituent; and further preferably a hydrogen atom or a C6-C12 aryl group optionally having a substituent.

In the general formula (6), X represents a single bond or a fluorene group optionally having a substituent. X is preferably a single bond, or a fluorene group optionally having a substituent, in which a total carbon number is 12 to 20.

In the general formula (6), A and B each independently represent a C1-C5 alkylene group optionally having a substituent, and each independently preferably represent an alkylene group containing 2 or 3 carbon atoms.

In the general formula (6), m and n each independently represent an integer of 0 to 6, preferably an integer of 0 to 3, and more preferably 0 or 1.

In the general formula (6), a and b each independently represent an integer of 0 to 10, preferably an integer of 1 to 3, and more preferably 1 or 2.

Specific examples of the constituent unit (B) may include those derived from 2,2'-bis(2-hydroxyethoxy)-1,1'-binaphthalene (BNE), DPBHBNA, and the like.

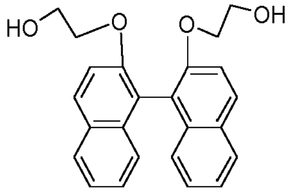
(BNE)

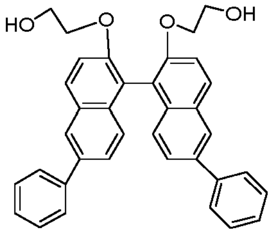
(DPBHBNA)

Furthermore, the thermoplastic resin of one embodiment of the present invention preferably has a constituent unit (C) derived from a monomer represented by the following general formula (7).

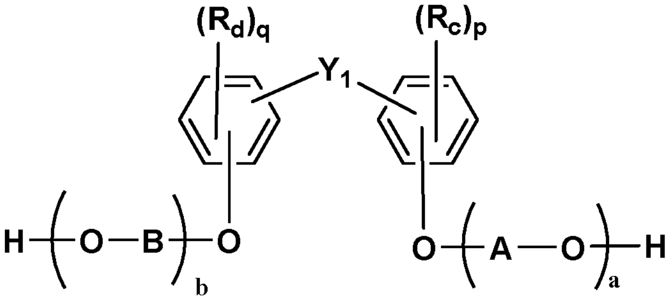
( 7 )

In the general formula (7), $R_c$ and $R_d$ are each independently selected from the group consisting of a halogen atom, a C1-C20 alkyl group optionally having a substituent, a C1-C20 alkoxy group optionally having a substituent, a C5-C20 cycloalkyl group optionally having a substituent, a C5-C20 cycloalkoxy group optionally having a substituent, and a C6-C20 aryl group optionally having a substituent.
$R_c$ and $R_d$ are preferably a hydrogen atom, a C6-C20 aryl group optionally having a substituent, or a C6-C20 heteroaryl group optionally having a substituent, which contains one or more heterocyclic atoms selected from O, N and S; more preferably a hydrogen atom or a C6-C20 aryl group optionally having a substituent; and further preferably a hydrogen atom or a C6-C12 aryl group optionally having a substituent.
In the general formula (7), $Y_1$ represents a single bond, a fluorene group optionally having a substituent, or any one of structural formulae represented by the following formulae (8) to (14); and preferably represents a single bond or a structural formula represented by the following formula (8).

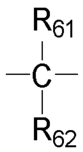
(8)

$-S-$
(9)

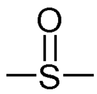
(10)

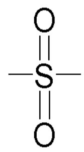
(11)

$-(CH_2)_r-$
(12)

$-O-$
(13)

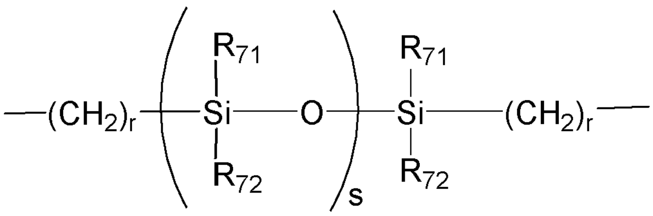
(14)

In the formulae (8) to (14), $R_{61}$, $R_{62}$, $R_{71}$ and $R_{72}$ each independently represent a hydrogen atom, a halogen atom, a C1-C20 alkyl group optionally having a substituent, or a C6-C30 aryl group optionally having a substituent, or represent a C1-C20 carbon ring or heterocyclic ring optionally having a substituent, which is formed by the binding between $R_{61}$ and $R_{62}$ or the binding between $R_{71}$ and $R_{72}$.
In the formulae (8) to (14), r and s each independently represent an integer of 0 to 5000.
In the general formula (7), A and B each independently represent a C1-C5 alkylene group optionally having a

substituent, or each independently preferably represent an alkylene group containing 2 or 3 carbon atoms. In the general formula (7), p and q each independently represent an integer of 0 to 4, and preferably 0 or 1. In addition, in the general formula (7), a and b each independently represent an integer of 0 to 10, preferably an integer of 0 to 5, more preferably an integer of 0 to 2, and for example, 0 or 1.

Specific examples of the constituent unit (C) may include those derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis[6-(2-hydroxyethoxy)naphthalen-2-yl]fluorene (BNEF), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanolfluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), and TrisP-HAP (4,4',4"-ethylidenetrisphenol). Among these, the constituent units (C) are preferably those derived from BPEF or BNEF.

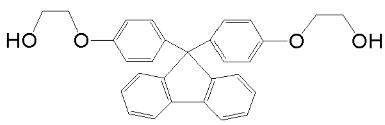
(BPEF)

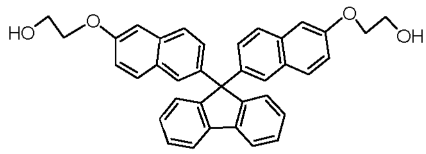
(BNEF)

The thermoplastic resin of one embodiment of the present invention essentially comprises the constituent unit (A). The thermoplastic resin of one embodiment of the present invention may also be a polymer that contains the constituent unit (B) and does not contain the constituent unit (C), a polymer that contains the constituent unit (C) and does not contain the constituent unit (B), a copolymer having the constituent unit (B) and the constituent unit (C), a mixture of a polymer having the constituent unit (B) and a polymer having the constituent unit (C), or a combination thereof. Examples of the polymer that contains the constituent unit (C) and does not contain the constituent unit (B) may include those having constituent units represented by the following formulae (I-1) to (I-3). Examples of the copolymer having the constituent unit (B) and the constituent unit (C) may include those having constituent units represented by formulae (II-1) to (II-4) as shown below.

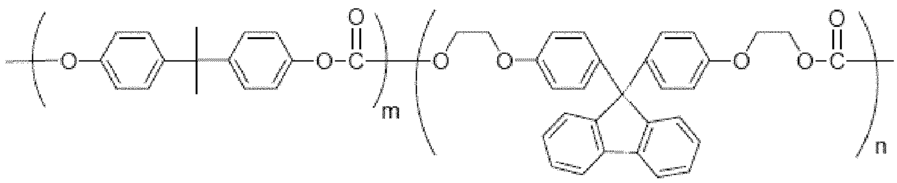
(I−1)

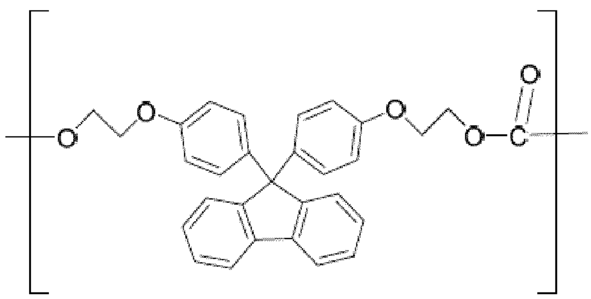
(I−2)

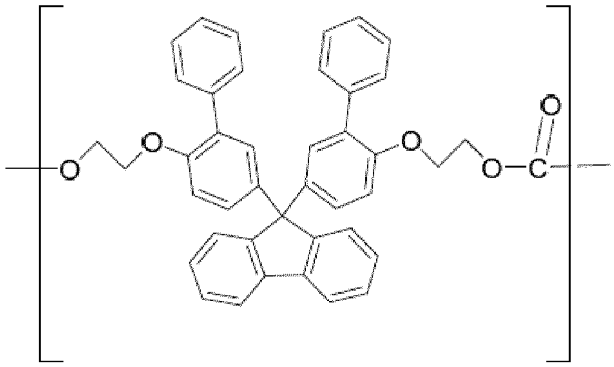

(I-3)

In the formula (I-1), m and n each represent an integer of 1 to 10, preferably an integer of 1 to 5, and more preferably 1; and
the number of repeating units of the formula (I-3) is an integer of 1 to 10, preferably an integer of 1 to 5, and more preferably 1.

Moreover, as a polymer having multiple types of constituent units, both a block copolymer, in which the values of m and n are large (for example, 100 or more), and a random copolymer, may be adopted. Of these, a random copolymer is preferable, and more preferably, a random copolymer, in which the values of m and n are 1, is used.

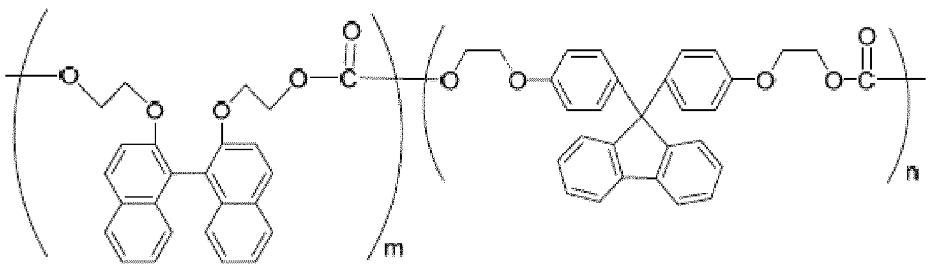

(II-1)

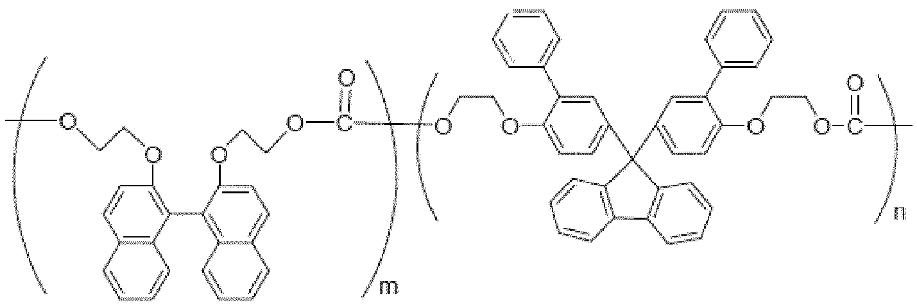

(II-2)

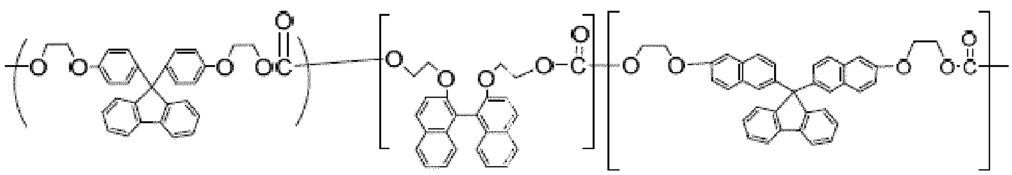

(II-3)

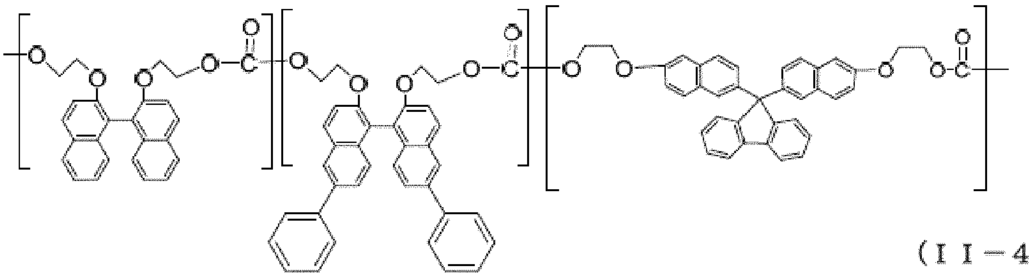

(I I −4)

In the above formulae (II-1) to (II-4), m and n each independently represent an integer of 1 to 10, preferably an integer of 1 to 5, and more preferably 1.

Furthermore, as a polymer having multiple types of constituent units, both a block copolymer, in which the values of m and n (or m, n and l) are large (for example, 100 or more), and a random copolymer, may be adopted. Of these, a random copolymer is preferable, and more preferably, a random copolymer, in which the values of m and n (or m, n and l) are 1, is used.

In such a copolymer, the molar ratio between the constituent unit (B) and the constituent unit (C) is preferably 1 : 99 to 99 : 1, more preferably 10 : 90 to 90 : 10, further preferably 15 : 85 to 85 : 15, and particularly preferably 30 : 70 to 70 : 30. In addition, in the mixture, the mass ratio between a polymer having the constituent unit (B) and a polymer having the constituent unit (C) is preferably 1 : 99 to 99 : 1, more preferably 10 : 90 to 90 : 10, further preferably 15 : 85 to 85 : 15, and particularly preferably 30 : 70 to 70 : 30.

Moreover, the thermoplastic resin of one embodiment of the present invention preferably comprises a constituent unit (D) derived from a monomer represented by the following general formula (5):

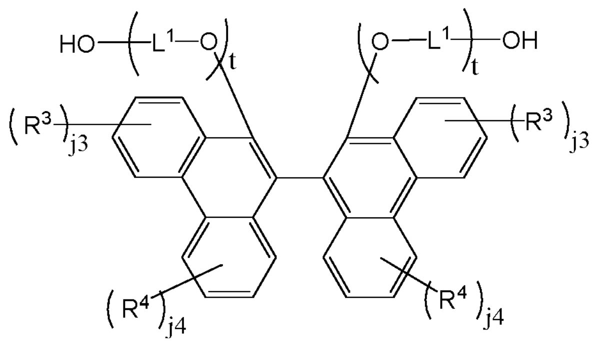

(5)

wherein

- $L^1$ each independently represent a divalent linking group;
- $R^3$ and $R^4$ each independently represent a halogen atom, or a substituent containing 1 to 20 carbon atoms and optionally containing an aromatic group;
- j3 and j4 each independently represent an integer of 0 to 4; and
- t represents an integer of 0 or 1.

$R^3$ and $R^4$ in the general formula (5) each independently preferably represent a methyl group, a phenyl group or a naphthyl group.

$L^1$ in the general formula (5) each independently preferably represent an alkylene group containing 1 to 5 carbon atoms and optionally having a substituent.

Furthermore, the monomer represented by the general formula (5) preferably has a structure represented by the following formula (5'):

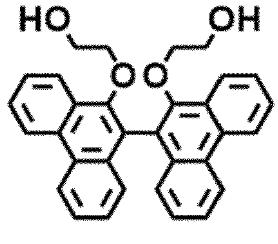

(5')

The thermoplastic resin of one embodiment of the present invention further preferably comprises a constituent unit derived from at least one monomer selected from the following monomer group:

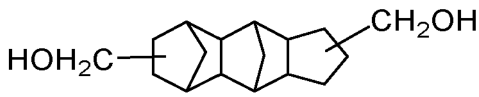

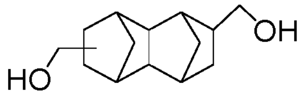

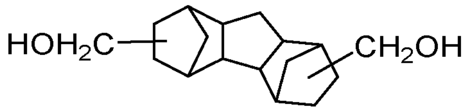

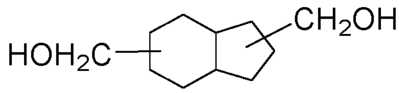

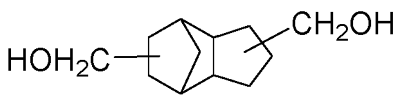

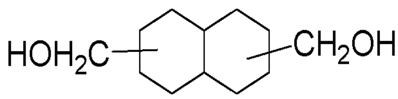

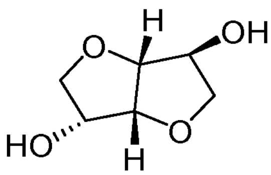

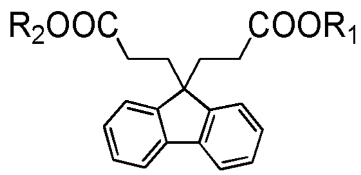

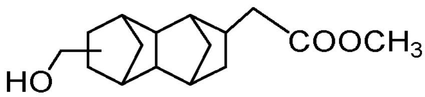

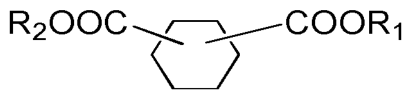

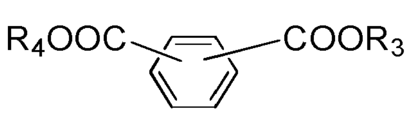

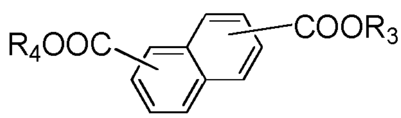

wherein, in the above formulae, $R_1$ and $R_2$ each independently represent a hydrogen atom, a methyl group, or an ethyl group; and $R_3$ and $R_4$ each independently represent a hydrogen atom, a methyl group, an ethyl group, or alkylene glycol containing 2 to 5 carbon atoms.

< Method for producing polyester carbonate resin >

The polyester carbonate resin of a preferred aspect of the present invention can be produced according to a melt polycondensation method, using, as raw materials, a dicarboxylic acid or a carboxylic acid diester constituting the above-described constituent unit (A), a diol compound, and a carbonate diester. Examples of the above-described diol compound may include the aforementioned aliphatic dihydroxy compounds and aromatic dihydroxy compounds. Preferred examples thereof may include the monomer represented by the above-described general formula (6) and/or the monomer represented by the above-described general formula (7). In this reaction, the polyester carbonate resin can be produced in the presence of a polycondensation catalyst, namely, in the presence of a basic compound catalyst, a transesterification catalyst, or a mixed catalyst of the basic compound catalyst and the transesterification catalyst.

Examples of the carbonate diester may include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Among these, diphenyl carbonate is particularly preferable from the viewpoint of reactivity and purity. The additive amount

of the carbonate diester can be determined by assuming that the diol component reacts with the dicarboxylic acid component in equal moles, and that the remainder reacts with the carbonate diester. The carbonate diester is used at a ratio of, preferably 0.60 to 1.50 moles, more preferably 0.80 to 1.40 moles, even more preferably 1.00 to 1.30 moles, further preferably 1.00 to 1.25 moles, and particularly preferably 1.00 to 1.20 moles, with respect to 1 mole of the difference between the diol component and the dicarboxylic acid component. The molecular weight of the polyester carbonate resin is regulated by adjusting this molar ratio.

Examples of the basic compound catalyst may include an alkali metal compound, an alkaline-earth metal compound, and a nitrogen-containing compound.

Examples of the alkali metal compound used in the present invention may include the organic acid salts, inorganic salts, oxides, hydroxides, hydrides or alkoxides of alkali metals. From the viewpoints of catalytic effects, costs, distribution amount, the influence on the hue of the resin, etc., sodium carbonate and sodium hydrogen carbonate are preferable.

Examples of the alkaline-earth metal compound may include the organic acid salts, inorganic salts, oxides, hydroxides, hydrides or alkoxides of the alkaline-earth metal compounds.

Examples of the nitrogen-containing compound may include quaternary ammonium hydroxides and the salts thereof, and amines.

As transesterification catalysts, the salts of zinc, tin, zirconium, and lead are preferably used, and these salts can be used alone or in combination thereof. In addition, the transesterification catalyst may also be used in combination with the aforementioned alkali metal compound or alkaline-earth metal compound.

Specific examples of the transesterification catalyst used herein may include tris(2,4-pentanedionato)aluminum(III), diethyl (4-methylbenzyl)phosphonate, zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate , zirconium oxyacetate, zirconium tetrabutoxide, lead(II) acetate, lead(IV) acetate, zirconium acetate, and titanium tetrabutoxide. Among others, zinc acetate, zirconium acetate, tris(2,4-pentanedionato)aluminum(III), and diethyl (4-methylbenzyl)phosphonate are preferable; and tris(2,4-pentanedionato)aluminum(III) and diethyl (4-methylbenzyl)phosphonate are more preferable.

Such a catalyst is used, so that the metal component in the catalyst becomes preferably 0.001 ppm to 1000 ppm, more preferably 0.01 ppm to 100 ppm, and particularly preferably 0.1 ppm to 100 ppm, with respect to the amount of a theoretically generated resin.

**In** the melt polycondensation method, the above-described raw materials or catalysts are used, and melt polycondensation is carried out under heating under ordinary pressure or reduced pressure, while removing by-products according a transesterification reaction.

Specifically, the reaction is carried out at a temperature of 120°C to 260°C, preferably of 180°C to 260°C, for 0.1 to 5 hours, preferably for 0.5 to 3 hours. Subsequently, the reaction temperature is increased while the degree of pressure reduction in the reaction system is increased, so that the reaction of a diol compound with a carbonate diester is carried out, and finally, the polycondensation reaction is carried out under a reduced pressure of 1 mmHg or less at a temperature of 200°C to 350°C for 0.05 to 2 hours. Such a reaction may be carried out either in a continuous system or in a batch system. The reaction apparatus used to perform the above-described reaction may be a vertical reaction apparatus equipped with an anchor-type impeller, a max-blend impeller, a helical ribbon-type impeller, etc., or a horizontal reaction apparatus equipped with paddle blades, lattice blades, glasses blades, etc., or further, an extruder-type reaction apparatus equipped with a screw, etc. Moreover, a reaction apparatus prepared by appropriately combining the aforementioned reaction apparatuses with one another, while considering the viscosity of a polymer, is preferably used.

In the method for producing the polyester carbonate resin of the present invention, after completion of the polymerization reaction, in order to maintain heat stability and hydrolytic stability, the catalyst may be removed or deactivated. In general, a method of deactivating a catalyst by addition of a known acidic substance is preferably applied. Specific examples of these acidic substances that are preferably used herein may include: esters such as butyl benzoate; aromatic sulfonic acids such as p-toluenesulfonic acid; aromatic sulfonic acid esters, such as butyl p-toluenesulfonate and hexyl p-toluenesulfonate; phosphoric acids, such as phosphorous acid, phosphoric acid, and phosphonic acid; phosphorous acid esters, such as triphenyl phosphite, monophenyl phosphite, diphenyl phosphite, diethyl phosphite, di-n-propyl phosphite, di-n-butyl phosphite, di-n-hexyl phosphite, dioctyl phosphite, and monooctyl phosphite; phosphoric acid esters, such as triphenyl phosphate, diphenyl phosphate, monophenyl phosphate, dibutyl phosphate, dioctyl phosphate, and monooctyl phosphate; phosphonic acids, such as diphenyl phosphonate, dioctyl phosphonate, and dibutyl phosphonate; phosphonic acid esters such as diethyl phenyl phosphonate; phosphines, such as triphenylphosphine and bis(diphenylphosphino)ethane; boric acids, such as boric acid and phenyl borate; aromatic sulfonates, such as tetrabutylphosphonium dodecylbenzenesulfonate; organic halides, such as chloride stearate, benzoyl chloride, and p-toluenesulfonyl chloride; alkyl sulfates such as dimethyl sulfonate; and organic halogenates such as benzyl chloride. From the viewpoints of deactivating effects, and the hue and stability of the resin, aromatic sulfonates such as tetrabutylphosphonium dodecylbenzene sulfonate are preferably used. Such a deactivating agent is used in an amount

of 0.01 to 50 times moles, and preferably 0.3 to 20 times moles, with respect to the amount of the catalyst. If the amount of the deactivating agent is smaller than 0.01 time mole with respect to the amount of the catalyst, deactivating effects unfavorably become insufficient. On the other hand, if the amount of the deactivating agent is larger than 50 times moles with respect to the amount of the catalyst, it is unfavorable that heat resistance is decreased and the molded body is easily colored.

After deactivation of the catalyst, a step of removing a low-boiling-point compound from the polymer by devolatilization at a pressure of 0.1 to 1 mmHg and at a temperature of 200°C to 350°C may be established. For this step, a horizontal apparatus equipped with stirring blades having excellent surface renewal ability, such as paddle blades, lattice blades or glasses blades, or a thin film evaporator is preferably used.

The polyester carbonate resin of the present invention is desired to contain a foreign matter in an amount as small as possible, and thus, filtration of melted raw materials and filtration of a catalyst solution are preferably carried out. The thickness of a filter mesh is preferably 5 μm or less, and more preferably 1 μm or less. Moreover, filtration of the generated resin through a polymer filter is preferably carried out. The thickness of the polymer filter mesh is preferably 100 μm or less, and more preferably 30 μm or less. Furthermore, a step of collecting resin pellets must be naturally performed under a low-dust environment, and the class is preferably 1000 or less, and more preferably 100 or less.

< Method for producing polyester resin >

The polyester resin of a preferred aspect of the present invention can be produced according to a conventionally known method for producing a polyester, using a dicarboxylic acid or a carboxylic acid diester constituting the above-described constituent unit (A) and a diol compound. Examples of the method for producing the polyester resin may include melt polymerization methods such as a transesterification method and a direct esterification method, and solution polymerization methods. The above-described diol compound may include the aforementioned aliphatic dihydroxy compounds and aromatic dihydroxy compounds. Preferred examples of the diol compound may include the monomer represented by the above-described general formula (6) and/or the monomer represented by the above-described general formula (7).

Upon production of the polyester resin of the present invention, there can be used a transesterification catalyst, an esterification catalyst, a polycondensation catalyst, etc. which are used upon production of common polyester resins. Examples of these catalysts may include, but are not particularly limited to, compounds of metals such as zinc, lead, cerium, cadmium, manganese, cobalt, lithium, sodium, potassium, calcium, nickel, magnesium, vanadium, aluminum, titanium, antimony, germanium, and tin (e.g. fatty acid salts, carbonates, phosphates, hydroxides, chlorides, oxides, and alkoxides), and magnesium metals. These substances can be used alone or in combination of two or more types. As catalysts, among the above-described substances, compounds of manganese, cobalt, zinc, titanium, calcium, antimony, germanium, and tin are preferable; and compounds of manganese, titanium, antimony, germanium, and tin are more preferable. The amount of these catalysts used is not particularly limited, and the amount of the catalyst as a metal component is preferably 1 to 1000 ppm, more preferably 3 to 750 ppm, and further preferably 5 to 500 ppm, with respect to the raw materials of the polyester resin.

Although the reaction temperature in the polymerization reaction depends on the type of a catalyst, the amount of the catalyst used, etc., it is generally selected from the range of 150°C to 300°C. Taking into consideration the reaction rate and coloration of the resin, the reaction temperature is preferably 180°C to 280°C. The pressure in the reaction layer is adjusted from under an air atmosphere, finally preferably to 1 kPa or less, and finally more preferably to 0.5 kPa or less.

When the polymerization reaction is carried out, a phosphorus compound may be added as desired. Examples of such a phosphorus compound may include, but are not limited to, phosphoric acid, phosphorous acid, phosphoric acid ester, phosphorous acid ester. Examples of such a phosphoric acid ester may include, but are not limited to, methyl phosphate, ethyl phosphate, butyl phosphate, phenyl phosphate, dimethyl phosphate, diethyl phosphate, dibutyl phosphate, diphenyl phosphate, trimethyl phosphate, triethyl phosphate, tributyl phosphate, and triphenyl phosphate. Examples of such a phosphorus acid ester may include, but are not limited to, methyl phosphite, ethyl phosphite, butyl phosphite, phenyl phosphite, dimethyl phosphite, diethyl phosphite, dibutyl phosphite, diphenyl phosphite, trimethyl phosphite, triethyl phosphite, tributyl phosphite, and triphenyl phosphite. These compounds can be used alone or in combination of two or more types. The concentration of phosphorus atoms in the polyester resin of the present invention is preferably 1 to 500 ppm, more preferably 5 to 400 ppm, and further preferably 10 to 200 ppm.

Further, upon production of the polyester resin of the present invention, etherification inhibitors, various types of stabilizers such as heat stabilizers and light stabilizers, polymerization regulators, etc. can be used.

< Physical properties of thermoplastic resin >

(1) Refractive index (nD)

In one embodiment of the present invention, the thermoplastic resin is characterized in that it has a high refractive index, and the refractive index is preferably 1.600 to 1.750, more preferably 1.665 to 1.750, and particularly preferably 1.665 to 1.700. In the present invention, the refractive index can be measured by the method described in the after-mentioned Examples.

(2) Abbe number (v)

In one embodiment of the present invention, the Abbe number of the thermoplastic resin is preferably 15.0 to 23.0, more preferably 15.0 to 20.4, and particularly preferably 16.0 to 20.0. In the present invention, the Abbe number can be measured by the method described in the after-mentioned Examples.

(3) Glass transition temperature (Tg)

In one embodiment of the present invention, the thermoplastic resin is characterized in that it has high heat resistance, and the glass transition temperature (Tg) is preferably 140°C to 180°C, more preferably 147°C to 180°C, and particularly preferably 150°C to 175°C. **In** the present invention, the glass transition temperature can be measured by the method described in the after-mentioned Examples.

(4) Polystyrene-converted weight average molecular weight (Mw)

**In** one embodiment of the present invention, the polystyrene-converted weight average molecular weight of the thermoplastic resin is preferably 10,000 to 100,000, more preferably 10,000 to 80,000, and particularly preferably 10,000 to 60,000.

< Thermoplastic resin composition >

Another embodiment of the present invention relates to a thermoplastic resin composition comprising the aforementioned thermoplastic resin and additives. The thermoplastic resin composition of the present embodiment may also comprise a resin other than the thermoplastic resin of the present invention comprising the aforementioned constituent unit (A), in a range in which such a resin does not impair the desired effects of the present embodiment. Such a resin is not particularly limited, and it may be, for example, at least one resin selected from the group consisting of a polycarbonate resin, a polyester resin, a polyester carbonate resin, a (meth)acrylic resin, a polyamide resin, a polystyrene resin, a cycloolefin resin, an acrylonitrile-butadiene-styrene copolymer resin, a vinyl chloride resin, a polyphenylene ether resin, a polysulfone resin, a polyacetal resin, and a methyl methacrylate-styrene copolymer resin. Various types of known resins can be used as such resins, and one type of such resin alone can be added to, or a combination of two or more types of such resins can be added to the thermoplastic resin composition.

[Antioxidant]

The thermoplastic resin composition preferably comprises an antioxidant as an additive described above.

As such an antioxidant, the thermoplastic resin composition preferably comprises at least one of a phenolic antioxidant and a phosphite-based antioxidant.

Examples of the phenolic antioxidant may include 1,3,5-tris(3,5-di-tert-butyl-4-hydroxyphenylmethyl)-2,4,6-trimethylbenzene, 1,3,5-tris(3,5-di-tert-butyl-4-hydroxybenzyl)-1,3,5-triazine-2,4,6(1H,3H,5H)-trione, 4,4',4"-(1-methylpropanyl-3-ylidene)tris(6-tert-butyl-m-cresol), 6,6'-di-tert-butyl-4,4'-butylidenedi-m-cresol, octadecyl 3-(3,5-di-tert-butyl-4-hydroxyphenyl)propionate, pentaerythritol-tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyl}-2,4,8,10-tetraoxospiro[5.5]undecane, and pentaerythritol-tetrakis[3-(3,5-di-tert-butyl-4-hydroxyphenyl)propionate]. Among these, pentaerythritol-tetrakis[3-(3,5-di-tert-butyl-4-hydroxyphenyl)propionate] is preferable.

Examples of the phosphite-based antioxidant may include 2-ethylhexyl diphenyl phosphite, isodecyl diphenyl phosphite, triisodecyl phosphite, triphenyl phosphite, 3,9-bis(octadecyloxy)-2,4,8,10-tetraoxy-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2'-methylenebis(4,6-di-tert-butylphenyl)2-ethylhexyl phosphite, tris(2,4-ditert-butylphenyl) phosphite, tris(nonylphenyl) phosphite, tetra-C12-15-alkyl(propane-2,2-diylbis(4,1-phenylene)) bis(phosphite), and 3,9-bis(2,6-di-tert-butyl-4-methylphenoxy)-2,4,8, 10-tetraoxa-3,9-diphosphaspiro[5.5]undecane. Among these, 3,9-bis(2,6-di-tert-butyl-4-methylphenoxy)-2,4,8,10-tetraoxa-3,9-diphosphaspiro[5.5]undecane is preferable.

As such antioxidants, the aforementioned compounds may be used alone as a single type, or may also be used as a mixture of two or more types.

The antioxidant is preferably comprised in the thermoplastic resin composition in an amount of 1 ppm by weight to 3000 ppm by weight, with respect to the total weight of the resin composition. The content of the antioxidant in the thermoplastic resin composition is more preferably 50 ppm by weight to 2500 ppm by weight, further preferably 100 ppm by weight to 2000 ppm by weight, particularly preferably 150 ppm by weight to 1500 ppm by weight, and further particularly preferably 200 ppm by weight to 1200 ppm by weight.

[Release agent]

The thermoplastic resin composition preferably comprises a release agent as an additive described above.

Examples of the release agent may include ester compounds including glycerin fatty acid esters such as mono/diglyceride of glycerin fatty acid, glycol fatty acid esters such as propylene glycol fatty acid ester and sorbitan fatty acid ester, higher alcohol fatty acid esters, full esters of aliphatic polyhydric alcohol and aliphatic carboxy acid, and monofatty acid esters. When an ester of aliphatic polyhydric alcohol and aliphatic carboxy acid is used as a release agent, any of a monoester, a full ester, and the like can be adopted. For example, those other than full esters, such as a monoester, may be used.

Specific examples of the release agent may include the following substances: namely,

sorbitan fatty acid esters, such as sorbitan stearate, sorbitan laurate, sorbitan oleate, sorbitan trioleate, sorbitan tribehenate, sorbitan stearate, sorbitan tristearate, and sorbitan caprylate;
propylene glycol fatty acid esters, such as propylene glycol monostearate, propylene glycol monooleate, propylene glycol monobehenate, propylene glycol monolaurate, and propylene glycol monopalmitate;
higher alcohol fatty acid esters, such as stearyl stearate;
glycerin fatty acid ester monoglycerides, which include: monoglycerides including glycerin monostearate, glycerin monohydroxystearate such as glycerin mono-12-hydroxystearate, glycerin monooleate, glycerin monobehenate, glycerin monocaprylate, glycerin monocaprate and glycerin monolaurate; and mono/diglycerides including glycerin mono/distearate, glycerin mono/distearate, glycerin mono/dibehenate, glycerin mono/dioleate;
acetylated monoglycerides of glycerin fatty acid esters, such as glycerin diacetomonolaurate;
organic acid monoglycerides of glycerin fatty acid esters, such as citric acid fatty acid monoglyceride, succinic acid fatty acid monoglyceride, and diacetyl tartaric acid fatty acid monoglyceride; and
polyglycerin fatty acid esters, such as diglycerin stearate, diglycerin laurate, diglycerin oleate, diglycerin monostearate, diglycerin monolaurate, diglycerin monomyristate, diglycerin monooleate, tetraglycerin stearate, decaglycerin laurate, decaglycerin oleate, and polyglycerin polyricinoleate.

The release agent is preferably comprised in the thermoplastic resin composition in an amount of 1 ppm by weight to 5000 ppm by weight, with respect to the total weight of the resin composition. The content of the release agent in the thermoplastic resin composition is more preferably 50 ppm by weight to 4000 ppm by weight, further preferably 100 ppm by weight to 3500 ppm by weight, particularly preferably 500 ppm by weight to 13000 ppm by weight, and further particularly preferably 1000 ppm by weight to 2500 ppm by weight.

[Other additives]

Additives other than the aforementioned antioxidant and release agent may also be added to the thermoplastic resin composition. Examples of the additives that may be comprised in the thermoplastic resin composition may include a compounding agent, a catalyst inactivator, a thermal stabilizer, a plasticizer, a filler, an ultraviolet absorber, a rust inhibitor, a dispersant, an antifoaming agent, a leveling agent, a flame retardant, a lubricant, a dye, a pigment, a bluing agent, a nucleating agent, and a clearing agent.

The content of additives other than the antioxidant and the release agent in the thermoplastic resin composition is preferably 10 ppm by weight to 5.0% by weight, more preferably 100 ppm by weight to 2.0% by weight, and further preferably 1000 ppm by weight to 1.0% by weight, but is not limited thereto.

The aforementioned additives are likely to adversely affect transmittance. Thus, it is preferable not to add such additives excessively, and more preferably, the total additive amount is, for example, within the aforementioned range.

< Optical member >

The thermoplastic resin or the thermoplastic resin composition of the present invention (hereinafter simply abbreviated as a "resin composition") can be preferably used in an optical member. In one embodiment of the present

invention, an optical member comprising the resin composition of the present invention is provided. In one embodiment of the present invention, the optical member may include, but is not limited to, an optical disk, a transparent conductive substrate, an optical card, a sheet, a film, an optical fiber, a lens, a prism, an optical film, a substrate, an optical filter, a hard coat film, and the like. The resin composition of the present invention has high fluidity, and can be molded according to a cast method. Hence, the present resin composition is preferably used, in particular, in production of a thin optical member. In a preferred embodiment of the present invention, the optical member produced using the resin composition of the present invention may be an optical lens. In another preferred embodiment of the present invention, the optical member produced using the resin composition of the present invention may be an optical film.

When an optical member comprising the resin composition of the present invention is produced according to injection molding, the optical member is preferably molded under conditions of a cylinder temperature of 260°C to 350°C and a mold temperature of 90°C to 170°C. The optical member is more preferably molded under conditions of a cylinder temperature of 270°C to 320°C and a mold temperature of 100°C to 160°C. When the cylinder temperature is higher than 350°C, the resin composition is decomposed and colored. On the other hand, when the cylinder temperature is lower than 260°C, the melt viscosity becomes high, and it easily becomes difficult to mold the optical member. Moreover, when the mold temperature is higher than 170°C, it easily becomes difficult to remove a molded piece consisting of the resin composition from a mold. On the other hand, when the mold temperature is lower than 90°C, the resin is hardened too quickly in a mold upon the molding thereof, and it becomes difficult to control the shape of a molded piece, or it easily becomes difficult to sufficiently transcribe a vehicle placed in a mold.

< Optical lens >

In one embodiment of the present invention, the resin composition can be preferably used in an optical lens. Since the optical lens produced using the resin composition of the present invention has a high refractive index and is excellent in terms of heat resistance, it can be used in fields in which expensive glass lenses having a high refractive index have been conventionally used, such as telescopes, binoculars and TV projectors, and thus, the optical lens produced using the present resin composition is extremely useful.

For instance, regarding a lens used for smart phones, a lens molded from a thermoplastic resin comprising the constituent unit (A) is overlapped with a lens molded from a resin comprising the constituent unit represented by any one of the formulae (II-1) to (II-4) or a resin comprising a constituent unit derived from a monomer represented by any one of the following formulae, so that the lenses can be used as a lens unit:

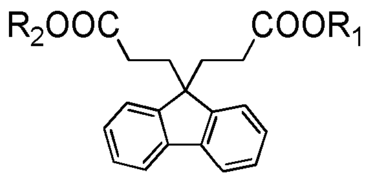

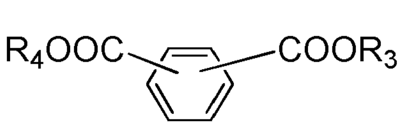

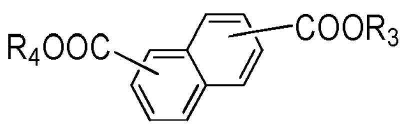

wherein $R_1$ and $R_2$ each independently represent a hydrogen atom, a methyl group or an ethyl group, and $R_3$ and $R_4$ each independently represent a hydrogen atom, a methyl group, an ethyl group or alkylene glycol containing 2 to 5 carbon atoms.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the central portion is preferably 0.05 to 3.0 mm, more preferably 0.05 to 2.0 mm, and further preferably 0.1 to 2.0 mm. In addition, the diameter is preferably 1.0 mm to 20.0 mm, more preferably 1.0 to 10.0 mm, and further preferably , 3.0 to 10.0 mm. Further, regarding the shape thereof, the optical lens of the present invention is preferably a meniscus lens, in which one surface is a convex, and the other surface is a concave.

The optical lens of the present invention is molded according to any given method such as die molding, cutting,

polishing, laser machining, electrical discharge machining, or etching. Among these methods, die molding is more preferable in terms of production costs.

< Optical film >

In one embodiment of the present invention, the resin composition can be preferably used in optical films. In particular, since the optical film produced using the polycarbonate resin of the present invention is excellent in terms of transparency and heat resistance, it can be preferably used for films for use in liquid crystal substrates, optical memory cards, etc.

In order to avoid the mixing of foreign matters into the optical lens, the molding environment must be naturally a low-dust environment, and the class is preferably 6 or less, and more preferably 5 or less.

Examples

Hereinafter, the examples of the present invention will be shown together with comparative examples, and the contents of the invention will be described in detail. However, the present invention is not limited to these examples. Besides, the measured values in the Examples were measured using the following methods or devices.

1) NMR analysis

Measuring device: Fourier transform nuclear magnetic resonance AVANCE III HD 400 (manufactured by BRUKER)

The measured sample was dissolved in deuterated dimethyl sulfoxide, and the $^{1}$H-NMR spectrum was then measured.

2) Melting point

The crystals (3 mg) obtained in the synthesis example were weighed in an aluminum pan, and were then measured using a differential scanning calorimetry apparatus (DSC7020, manufactured by Hitachi High-Tech Science Corporation) under the following operating conditions, using aluminum oxide as a control. It is to be noted that the onset temperature of the endothermic peak measured by differential scanning calorimetry (DSC) was defined to be a melting point.

(Operating conditions)

Temperature-increasing rate: 10°C/min
Measurement temperature range: 30°C to 400°C
Measurement atmosphere: open, 50mL/min nitrogen

3) Refractive index

Measuring device: refractive index meter (RA-500; manufactured by KYOTO

ELECTRONICS MANUFACTURING CO., LTD.)

Tetrahydrofuran solutions (solutions having concentrations of 20%, 15%, and 10%) of the measured samples were prepared, and the refractive index was then measured using a refractometer. From the obtained results, the relationship between the concentration and the refractive index was derived, and the value at 100% concentration was then calculated by an extrapolation method. The obtained value was used to be the refractive index of the measured sample.

4) Powder X-ray diffraction method (PXRD)

The compound (0.1 g) obtained in the synthesis example was filled into the sample filling section of a glass test plate, and the following device and the following conditions were used for the measurement.

[Measuring device]
MiniFlex600-C / manufactured by Rigaku Corporation
[Measuring conditions]

X-ray source: CuKα
Tube voltage: 40 kV
Tube current: 15 mA
Scanning axis: 2θ/θ
Mode: continuous
Measurement range: 2θ = 5° to 90°
Steps: 0.03°
Speed measuring time: 1.0°/min
Incident slit: 0.25°
Receiving slit: 13.00 mm

5) Weight average molecular weight (Mw)

The weight average molecular weight of the obtained resin was measured by applying gel permeation chromatography (GPC) and then calculating the weight average molecular weight in terms of standard polystyrene. The used apparatus, columns and measurement conditions are as follows.

- GPC apparatus: HLC-8420GPC, manufactured by Tosoh Corporation
- Columns: TSKgel SuperHM-M x 3, manufactured by Tosoh Corporation

TSKgel guard column SuperH-H x 1, manufactured by Tosoh Corporation
TSKgel SuperH-RC x 1, manufactured by Tosoh Corporation

- Detector: RI Detector
- Standard polystyrene: Standard Polystyrene Kit PStQuick C, manufactured by Tosoh Corporation
- Sample solution: 0.2 mass % Tetrahydrofuran solution
- Eluent: Tetrahydrofuran
- Eluent flow rate: 0.6 mL/min
- Column temperature: 40°C

6) Glass transition temperature (Tg)

The glass transition temperature (Tg) was measured according to JIS K7121-1987, using a differential scanning calorimeter by a temperature-increasing program of 10°C/min.
Differential scanning calorimeter: DSC2500, manufactured by TA Instruments

7) Refractive index (nD)

A polycarbonate resin was molded according to JIS B 7071-2: 2018, to obtain a V block, which was then used as a test piece. The refractive index was measured at 23°C using a refractometer (KPR-3000, manufactured by Shimadzu Corporation).

8) Abbe number (ν)

The same test piece (V block) as that used in the measurement of a refractive index was used, and the refractive indexes at wavelengths of 486 nm, 589 nm, and 656 nm were measured at 23°C using a refractometer. Thereafter, the Abbe number was calculated according to the following equation:

$$\nu = (nD-1)/(nF-nC),$$

wherein

nD: refractive index at a wavelength of 589 nm,

nC: refractive index at a wavelength of 656 nm, and
nF: refractive index at a wavelength of 486 nm.

9) Low-molecular-weight compound percentage

The content of low-molecular-weight compounds indicates the area ratio of compounds having an Mw value of less than 1,000 as measured by GPC analysis. Therefore, the content of low-molecular-weight compounds was determined according to the following formula

[Equation 1]

$$\text{Low}-\text{molecular}-\text{weight compound ratio (\%)} =$$

$$\frac{\text{Total area of peaks of compounds having Mw value of less than 1,000 by GPC analysis}}{\text{Total area of all peaks of compounds by GPC analysis}} \text{x100}$$

The GPC analysis is performed as described above in order to measure the molecular weight of compounds having an Mw value of less than 1,000.

[Synthetic Example 1]

Production of 10,10'-bis(ethoxycarbonylmethoxy)-9,9'-biphenanthryl (the compound represented by the formula (1a-1-2))

30.1 g (0.08 mol) of 9,9'-biphenanthrene10,10'-diol,75 g of methyl isobutyl ketone,22.6 g of potassium carbonate, and 1.7 g of potassium iodide were added into a four-necked flask, followed by performing nitrogen substitution. Thereafter, the temperature was increased to 100°C, and 29.2 g of methyl isobutyl ketone was distillated under reduced pressure. Thereafter, 24.0 g (0.20 mol) of ethyl chloroacetate was added dropwise onto the reaction solution over 1 hour, while the temperature of the reaction solution was kept at 90°C. After that, the solution was stirred, while the temperature in the flask was kept at 90°C. The reaction was completed after 10 hours of stirring. Thereafter, while temperature was kept at 70°C, 45 g of methyl isobutyl ketone and 120 g of water were added to the reaction solution, the obtained solution was then washed with water at 80°C, and a water layer was then extracted. Subsequently, 30 g of water was added, and the obtained mixture was then washed with water at 80°C, and a water layer was then extracted. Thereafter, normal heptane was added, the obtained mixture was then cooled, and then, the reaction mixture was continuously subjected to cooling stirring at 25°C overnight. After that, a solid was separated from a filtrate by filtration.

To 42.6 g of the obtained solid, 184 g of methyl isobutyl ketone was added, and the solid was then dissolved therein by increasing the temperature. Thereafter, 100 g of water was added to the solution, and the thus obtained solution was washed with water at 75°C, and a water layer was extracted. This operation was repeated once. Thereafter, methyl isobutyl ketone and water (85 g) was distilled away by distillation. After that, 106 g of normal heptane was added, followed by cooling, and then, the reaction mixture was continuously stirred at 25°C overnight. After that, a solid was separated from a filtrate by filtration. The solid separated by filtration was dried at 80°C under reduced pressure to obtain 33.8 g of 10,10'-bis(ethoxycarbonylmethoxy)-9,9'-biphenanthryl (reaction yield: 77.7%). The purity of the obtained product of interest was measured to be 99.0% according to high performance liquid chromatography measurement.

The obtained compound was subjected to the following liquid chromatography-mass spectrometry and the above-described $^1$H-NMR analysis, and as a result, it became clear that the compound is 10,10'-bis(ethoxycarbonylmethoxy)-9,9'-biphenanthryl (the compound represented by the formula (1a-1-2)).

Liquid chromatography-mass spectrometry (mass spectrometry/electrospray ionization): mass 559.2 (M+H)

$^1$H-NMR analysis (400 MHz, solvent: deuterated DMSO) δ <ppm>: 0.96(t, 6H)3.76-3.88(m, 4H)4.22(d, 2H) 4.45(d, 2H)7.29(dd, 2H)7.34(m, 2H)7.60(m, 2H)7,73(m, 2H)7,79(m, 2H) 8.53(dd, 2H), 8.79(dd, 2H).

The melting point of the obtained compound was measured to be 159°C by the above-described analysis method. The differential scanning calorimetry analysis (DSC) data are shown in Figure 1. From the results of this analysis, it became clear that the obtained product of interest was crystal I.

Refractive index: 1.64

The PXRD measurement chart of the obtained compound is shown in Figure 2. It became clear from the peak patterns that the obtained compound was crystal α. With regard to the diffraction angles 2θ (°) of the appeared diffraction peaks, the relative integrated intensities based on the peak with the highest integrated intensity, and the relative intensities based on the peak with the highest intensity, the peaks having a relative integrated intensity of 10 or greater are selected and are shown in Table 1.

[Table 1]

| 2θ (°) | Relative integrated intensity | Relative intensity | | 2θ (°) | Relative integrated intensity | Relative intensity |
|---|---|---|---|---|---|---|
| 9.5 | 10.3 | 16.3 | | 20.5 | 11.2 | 28.4 |
| 10.8 | 11.5 | 53.3 | | 20.7 | 13.5 | 30.7 |
| 11.0 | 14.1 | 26.3 | | 21.2 | 11.9 | 17.7 |
| 12.2 | 19.6 | 23.4 | | 21.7 | 100.0 | 100.0 |
| 15.0 | 15.3 | 18.2 | | 22.2 | 13.6 | 20.7 |
| 16.6 | 12.7 | 15.7 | | 23.0 | 43.8 | 54.1 |
| 17.5 | 27.1 | 63.9 | | 24.4 | 11.6 | 14.1 |
| 17.8 | 31.7 | 32.1 | | 27.4 | 10.8 | 15.6 |
| 19.9 | 28.2 | 36.8 | | | | |

(Example 1)

Raw materials, namely, 3.743 g (0.0085 mol) of 9,9-bis[4-(2-hydroxyethoxy)phenyl]fluorene (BPEF) represented by the structural formula as shown below, 6.811 g (0.0122 mol) of diethyl 2,2'-([9,9'-biphenanthrene]-10,10'-diylbis(oxy))diacetate obtained in Synthetic Example 1 (Alias: 10,10'-bis(ethoxycarbonylmethoxy)-9,9'-biphenanthryl, abbreviation: BIPOL-DEC), 1.135 g (0.0183 mol) of ethylene glycol (EG), 0.7441 x $10^{-3}$ g (0.3036 x $10^{-5}$ mol) of manganese(II) acetate tetrahydrate, and 0.1244 x $10^{-2}$ g (0.6950 x $10^{-5}$ mol) of calcium acetate monohydrate were placed in a 50-mL reactor equipped with a stirrer and a distillation apparatus, and thereafter, the inside of the reaction system were set to be nitrogen flow conditions. This reactor was immersed in an oil bath heated to 100°C, and a transesterification reaction was initiated. Five minutes after initiation of the reaction, stirring was initiated, and at a time point of 120 minutes after initiation of the reaction, the temperature was increased to 230°C. The reaction mixture was retained for further 290 minutes. Thereafter, 0.8794 x $10^{-3}$ g (0.8794 x $10^{-5}$ mol) of phosphoric acid and 0.2398 x $10^{-2}$ g (0.2292 x $10^{-4}$ mol) of germanium dioxide were added to the reaction mixture, so that a polycondensation reaction was initiated. The temperature was increased to 270°C over 90 minutes, and at the same time, the pressure was reduced to 0 kPa. The reaction mixture was retained for 120 minutes, and thereafter, nitrogen gas was introduced into the reaction system, and the pressure was returned to 101.3 kPa, thereby obtaining a polyester resin.

The refractive index of the obtained polyester resin was 1.6910, the Abbe number thereof was 17.5, the Tg thereof was 168.7°C, and the polystyrene-converted weight average molecular weight (Mw) thereof was 15165.

Considering the composition ratio of the raw materials, in the obtained polyester resin, BIPOL-DEC-derived constituent unit : BPEF-derived constituent unit = 50 : 35 (mol ratio). Usually, the polyester resin is considered to have a high molecular weight, when carboxylic acid ester and dialcohol are reacted in equal molar amounts. Assuming that an excessive amount of EG was distilled away from the reaction system together with ethanol that was distilled away by the transesterification reaction, the composition of the obtained resin was assumed to be BIPOL-DEC-derived constituent unit : BPEF-derived constituent unit : EG-derived constituent unit = 50 : 35 : 15 (mol ratio). The composition of the obtained resin and the properties thereof are shown in Table 2.

(Example 2)

A polyester resin was obtained in the same manner as that of Example 1, with the exception that the raw materials shown in Table 2 were used. The composition of the obtained resin and the properties thereof are shown in Table 2.

(Comparative Example 1)

A polyester resin was obtained in the same manner as that of Example 1, with the exception that 4.906 g (0.0122 mol) of 2,2'-([1,1'-binaphthalene]-2,2'-diylbis(oxy))dicarboxylic acid (abbreviation: BINOL-DC) was used, instead of 10,10'-bis(ethoxycarbonylmethoxy)-9,9'-biphenanthryl obtained in Synthetic Example 1. The composition of the obtained resin and the properties thereof are shown in Table 2.

[Table 2]

| | Compositions of obtained resins | | | | | | Physical properties | | | | |
|---|---|---|---|---|---|---|---|---|---|---|---|
| | BIPOL-DEC 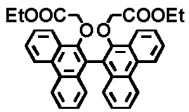 | BINOL-DC 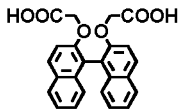 | BPEF 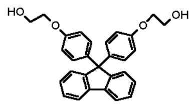 | EG 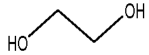 | BIPOL-2EO 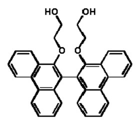 | BINO-L-2EO 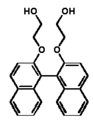 (BNE) | Refractive index (nD) | Abbe number (v) | Glass transition temperature (Tg) | Weight average molecular weight (Mw) | Low molecular weight compound percentage |
| [Unit] | [mol%] | [mol%] | [mol%] | [mol%] | [mol%] | [mol%] | [-] | [-] | [°C] | [-] | [%] |
| Ex. 1 | 50 | 0 | 35 | 15 | 0 | 0 | 1.6910 | 17.51 | 168.7 | 15165 | 2.5 |
| Comp. Ex. 1 | 0 | 50 | 35 | 15 | 0 | 0 | 1.6649 | 20.54 | 146.0 | 22109 | 2.1 |
| Ex. 2 | 30 | 20 | 0 | 5 | 25 | 20 | 1.7060 | 16.20 | 168.0 | 23421 | 4.1 |

## Claims

1. A thermoplastic resin, comprising a constituent unit (A) derived from a monomer represented by the following general formula (1):

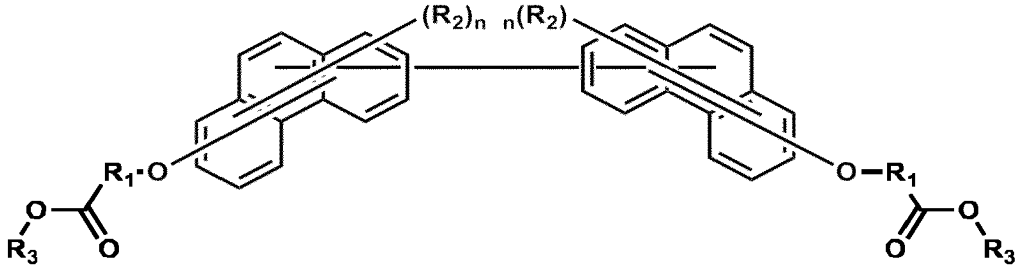

(1)

wherein $R_1$ each independently represents an alkylene group containing 1 to 4 carbon atoms, $R_2$ each independently represents an alkyl group containing 1 to 6 carbon atoms, an aryl group containing 6 to 18 carbon atoms or a halogen atom, n each independently represents 0 or an integer of 1 to 4, and $R_3$ each independently represents a hydrogen atom, an alkyl group containing 1 to 6 carbon atoms or an alkenyl group containing 2 to 4 carbon atoms.

2. The thermoplastic resin according to claim 1, wherein the monomer represented by the general formula (1) is a monomer represented by the following general formula (1a-1):

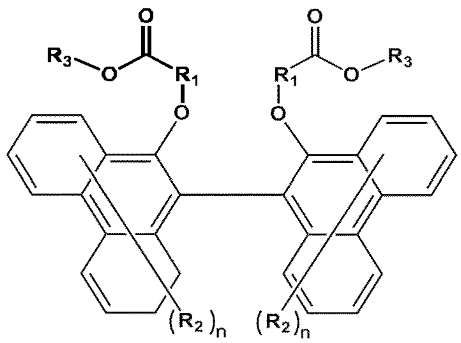

(1a-1)

wherein $R_1$, $R_2$, $R_3$, and n are as defined in the general formula (1).

3. The thermoplastic resin according to claim 1 or 2, wherein the thermoplastic resin is a polyester carbonate resin or a polyester resin.

4. The thermoplastic resin according to any one of claims 1 to 3, which comprises a constituent unit (B) derived from a monomer represented by the following general formula (6) and/or a constituent unit (C) derived from a monomer represented by the following general formula (7):

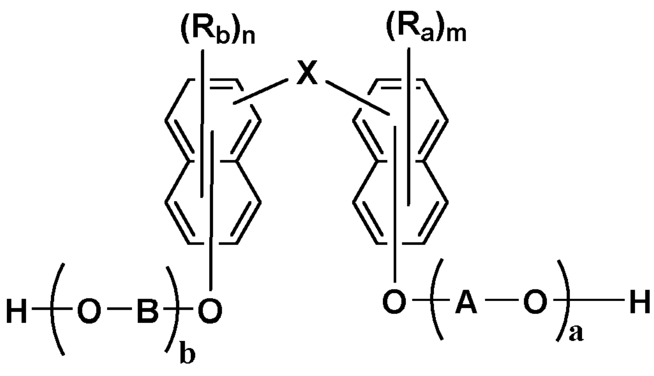

(6)

wherein

$R_a$ and $R_b$ are each independently selected from the group consisting of: a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C \equiv C-R_h$, wherein
$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,
X represents a single bond or a fluorene group optionally having a substituent,
A and B each independently represent an alkylene group containing 1 to 5 carbon atoms and optionally having a substituent,
m and n each independently represent an integer of 0 to 6, and
a and b each independently represent an integer of 0 to 10, and/or

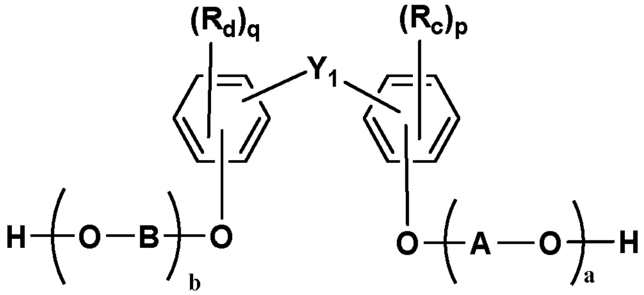

(7)

wherein
$R_c$ and $R_d$ are each independently selected from the group consisting of: a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent,
$Y_1$ represents a single bond, a fluorene group optionally having a substituent, or any one of the structural formulae represented by the following formulae (8) to (14):

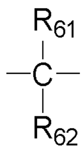

$-S-$

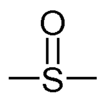

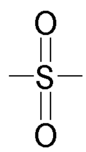

$-(CH_2)_r-$

$-O-$

(8) (9) (10) (11) (12) (13)

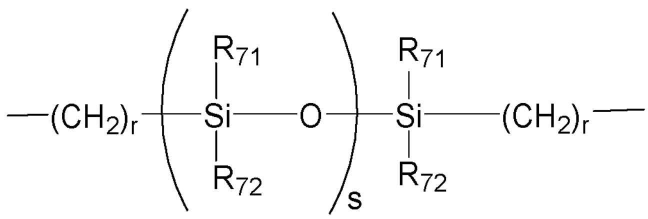

(14)

(wherein, in the formulae (8) to (14),
$R_{61}$, $R_{62}$, $R_{71}$ and $R_{72}$ each independently represent a hydrogen atom, a halogen atom, an alkyl group containing

1 to 20 carbon atoms and optionally having a substituent, or an aryl group containing 6 to 30 carbon atoms and optionally having a substituent, or represent a carbon ring or heterocyclic ring containing 1 to 20 carbon atom and optionally having a substituent, which is formed as a result that $R_{61}$ and $R_{62}$, or $R_{71}$ and $R_{72}$ bind to each other, r and s each independently represent an integer of 0 to 5000),
A and B each independently represent an alkylene group containing 1 to 5 carbon atoms and optionally having a substituent,
p and q each independently represent an integer of 0 to 4, and
a and b each independently represent an integer of 0 to 10.

**5.** The thermoplastic resin according to claim 4, wherein, in the general formula (6) and the general formula (7), A and B each independently represent an alkylene group containing 2 or 3 carbon atoms.

**6.** The thermoplastic resin according to claim 4 or 5, which comprises a constituent unit derived from any one of, at least, BPEF, BNE, BNEF, and DPBHBNA.

**7.** The thermoplastic resin according to any one of claims 1 to 6, which comprises a constituent unit (D) derived from a monomer represented by the following general formula (5):

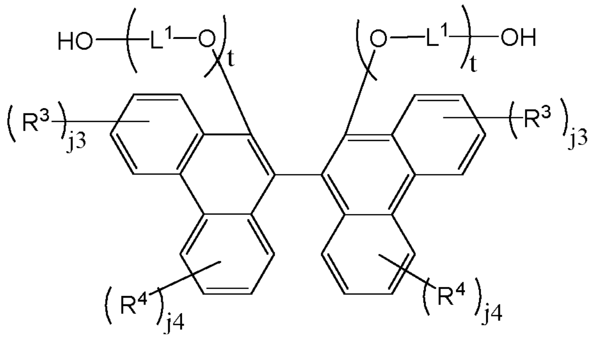

(5)

wherein

$L^1$ each independently represents a divalent linking group;
$R^3$ and $R^4$ each independently represent a halogen atom, or a substituent containing 1 to 20 carbon atoms and optionally containing an aromatic group;
j3 and j4 each independently represent an integer of 0 to 4; and
t represents an integer of 0 or 1.

**8.** The thermoplastic resin according to claim 7, wherein $R^3$ and $R^4$ in the general formula (5) each independently represent a methyl group, a phenyl group or a naphthyl group, and $L^1$ in the general formula (5) each independently represents an alkylene group containing 1 to 5 carbon atoms and optionally having a substituent.

**9.** The thermoplastic resin according to claim 7 or 8, wherein the monomer represented by the general formula (5) has a structure represented by the following formula (5'):

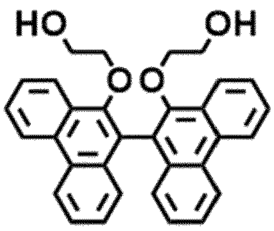

(5')

**10.** The thermoplastic resin according to any one of claims 1 to 9, which further comprises a constituent unit derived from at least one monomer selected from the following monomer group:

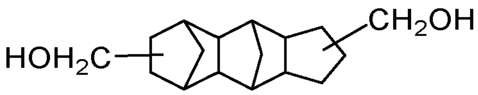

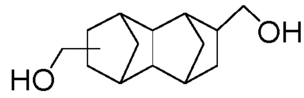

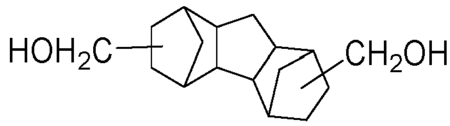

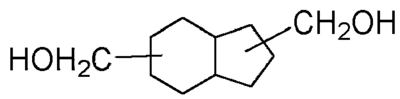

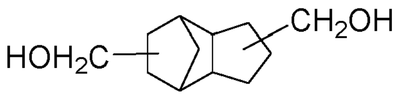

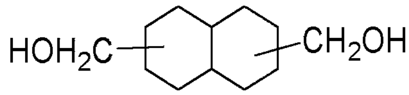

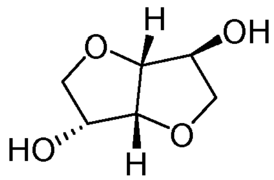

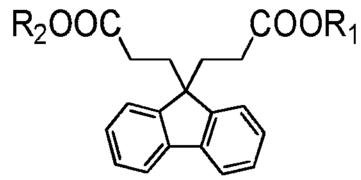

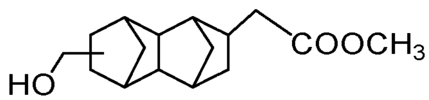

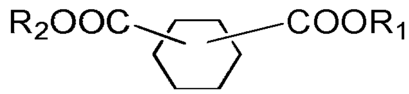

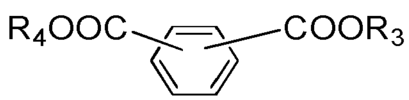

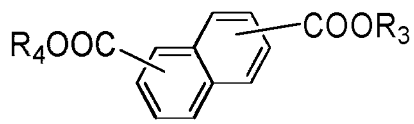

wherein $R_1$ and $R_2$ each independently represent a hydrogen atom, a methyl group or an ethyl group, $R_3$ and $R_4$ each independently represent a hydrogen atom, a methyl group, an ethyl group or alkylene glycol containing 2 to 5 carbon atoms.

**11.** The thermoplastic resin according to any one of claims 1 to 10, which has a polystyrene-converted weight average molecular weight (Mw) of 10,000 to 100,000 measured as indicated in the specification.

**12.** The thermoplastic resin according to any one of claims 1 to 11, which has a refractive index (nD) of 1.600 to 1,750 measured as indicated in the specification.

**13.** The thermoplastic resin according to any one of claims 1 to 12, which has an Abbe number (ν) of 15.0 to 23.0 measured as indicated in the specification.

**14.** The thermoplastic resin according to any one of claims 1 to 13, which has a glass transition temperature of 140°C to 180°C measured as indicated in the specification.

**15.** An optical lens, comprising the thermoplastic resin according to any one of claims 1 to 14.

**Patentansprüche**

**1.** Thermoplastisches Harz, umfassend eine Bestandteileinheit (A), die sich von einem durch die folgende allgemeine Formel (1) dargestellten Monomer ableitet:

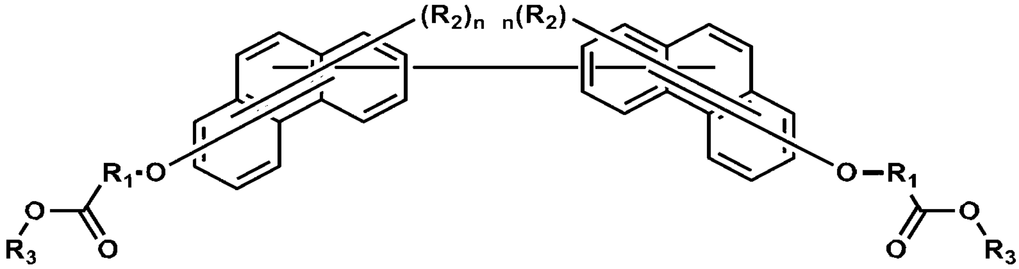 (1)

worin $R_1$ jeweils unabhängig eine Alkylengruppe, die 1 bis 4 Kohlenstoffatome enthält, darstellt, $R_2$ jeweils unabhängig eine Alkylgruppe, die 1 bis 6 Kohlenstoffatome enthält, eine Arylgruppe, die 6 bis 18 Kohlenstoffatome enthält, oder ein Halogenatom darstellt, n jeweils unabhängig 0 oder eine ganze Zahl von 1 bis 4 darstellt und $R_3$ jeweils unabhängig ein Wasserstoffatom, eine Alkylgruppe, die 1 bis 6 Kohlenstoffatome enthält, oder eine Alkenylgruppe, die 2 bis 4 Kohlenstoffatome enthält, darstellt.

**2.** Thermoplastisches Harz gemäß Anspruch 1, wobei das durch die allgemeine Formel (1) dargestellte Monomer ein durch die folgende allgemeine Formel (1a-1) dargestelltes Monomer ist:

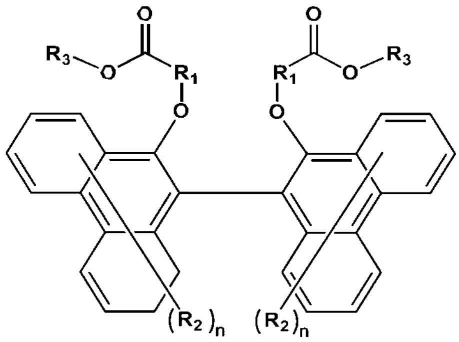 (1a-1)

worin $R_1$, $R_2$, $R_3$ und n so wie in der allgemeinen Formel (1) definiert sind.

**3.** Thermoplastisches Harz gemäß Anspruch 1 oder 2, wobei das thermoplastische Harz ein Polyestercarbonatharz oder ein Polyesterharz ist.

**4.** Thermoplastisches Harz gemäß einem der Ansprüche 1 bis 3, das eine Bestandteileinheit (B), die sich von einem durch die folgende allgemeine Formel (6) dargestellten Monomer ableitet und/oder eine Bestandteileinheit (C), die sich von einem durch die folgende allgemeine Formel (7) dargestellten Monomer ableitet, umfasst:

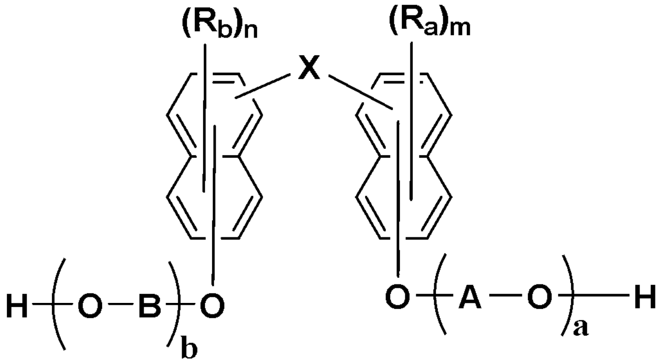 (6)

worin

$R_a$ und $R_b$ jeweils unabhängig aus der Gruppe, bestehend aus einem Wasserstoffatom, einem Halogenatom, einer Alkylengruppe, die 1 bis 20 Kohlenstoffatome enthält und optional einen Substituenten aufweist, einer

Alkoxylgruppe, die 1 bis 20 Kohlenstoffatome enthält und optional einen Substituenten aufweist, einer Cycloalkylgruppe, die 5 bis 20 Kohlenstoffatome enthält und optional einen Substituenten aufweist, einer Cycloalkoxylgruppe, die 6 bis 20 Kohlenstoffatome enthält und optional einen Substituenten aufweist, einer Heteroarylgruppe, die 6 bis 20 Kohlenstoffatome enthält und optional einen Substituenten aufweist, die ein oder mehrere Heterocyclusatome, ausgewählt aus O, N und S umfasst, einer Aryloxygruppe, die 6 bis 20 Kohlenstoffatome enthält und optional einen Substituenten aufweist, und -C≡C-$R_h$, ausgewählt sind, wobei

$R_h$ eine Arylgruppe, die 6 bis 20 Kohlenstoffatome enthält und optional einen Substituenten aufweist, oder eine Heteroarylgruppe, die 6 bis 20 Kohlenstoffatome enthält und optional einen Substituenten aufweist, oder eine Heteroarylgruppe darstellt, die 6 bis 20 Kohlenstoffatome enthält und optional einen Substituenten aufweist, die ein oder mehrere Heterocyclusatome, ausgewählt aus O, N und S, umfasst,

X eine Einfachbindung oder eine Fluorengruppe darstellt, die optional einen Substituenten aufweist,

A und B jeweils unabhängig eine Alkylengruppe, die 1 bis 5 Kohlenstoffatome enthält und optional einen Substituenten aufweist, darstellen,

m und n jeweils unabhängig eine ganze Zahl von 0 bis 6 darstellen und

a und b jeweils unabhängig eine ganze Zahl von 0 bis 10 darstellen, und/oder

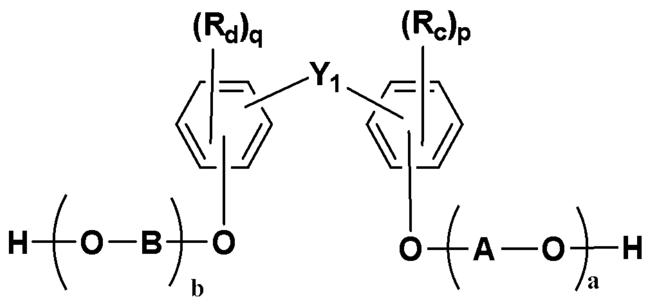

(7)

worin

$R_c$ und $R_d$ jeweils unabhängig aus der Gruppe, bestehend aus einem Wasserstoffatom, einem Halogenatom, einer Alkylgruppe, die 1 bis 20 Kohlenstoffatome enthält und optional einen Substituenten aufweist, einer Alkoxylgruppe, die 1 bis 20 Kohlenstoffatome enthält und optional einen Substituenten aufweist, einer Cycloalkylgruppe, die 5 bis 20 Kohlenstoffatome enthält und optional einen Substituenten aufweist, einer Cycloalkoxylgruppe, die 5 bis 20 Kohlenstoffatome enthält und optional einen Substituenten aufweist, einer Arylgruppe, die 6 bis 20 Kohlenstoffatome enthält und optional einen Substituenten aufweist, ausgewählt sind,

$Y_1$ eine Einfachbindung, eine Fluorengruppe, die optional einen Substituenten aufweist, oder eine der durch die folgenden Formeln (8) bis (14) dargestellten Strukturformeln darstellt:

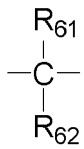 $-S-$ 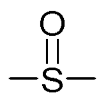 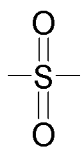 $-(CH_2)_r-$ $-O-$

(8) (9) (10) (11) (12) (13)

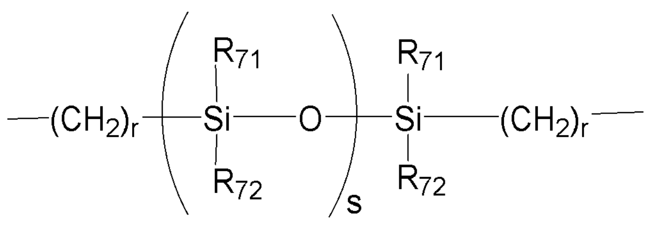

(14)

(wobei in den Formeln (8) bis (14)

$R_{61}$, $R_{62}$, $R_{71}$ und $R_{72}$ jeweils unabhängig ein Wasserstoffatom, ein Halogenatom, eine Alkylgruppe, die 1 bis 20 Kohlenstoffatome enthält und optional einen Substituenten aufweist, oder eine Arylgruppe, die 6 bis 30 Kohlenstoffatome enthält und optional einen Substituenten aufweist, darstellen oder einen Kohlenstoffring oder

heterocyclischen Ring darstellen, der 1 bis 20 Kohlenstoffatome enthält und optional einen Substituenten aufweist, der als Ergebnis, dass $R_{61}$, $R_{62}$ oder $R_{71}$ und $R_{72}$ aneinander binden, gebildet ist,
r und s jeweils unabhängig eine ganze Zahl von 0 bis 5.000 darstellen),
A und B jeweils unabhängig eine Alkylengruppe darstellen, die 1 bis 5 Kohlenstoffatome enthält und optional einen Substituenten aufweist,
p und q jeweils unabhängig eine ganze Zahl von 0 bis 4 darstellen und
a und b jeweils unabhängig eine ganze Zahl von 0 bis 10 darstellen.

5. Thermoplastisches Harz gemäß Anspruch 4, wobei in der allgemeinen Formel (6) und der allgemeinen Formel (7) A und B jeweils unabhängig eine Alkylengruppe, die 2 oder 3 Kohlenstoffatome enthält, darstellen.

6. Thermoplastisches Harz gemäß Anspruch 4 oder 5, das eine Bestandteileinheit umfasst, die sich von mindestens einem von BPEF, BNE, BNEF und DPBHBNA ableitet.

7. Thermoplastisches Harz gemäß einem der Ansprüche 1 bis 6, das eine Bestandteileinheit (D) umfasst, die sich von einem durch die folgende allgemeine Formel (5) dargestellten Monomer ableitet:

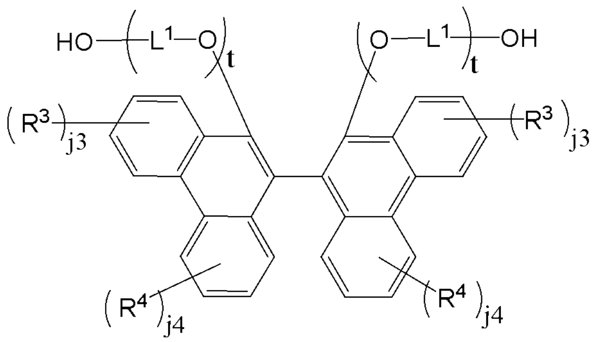

(5)

worin

$L^1$ jeweils unabhängig eine zweiwertige Verknüpfungsgruppe darstellt,
$R^3$ und $R^4$ jeweils unabhängig ein Wasserstoffatom oder einen Substituenten darstellen, der 1 bis 20 Kohlenstoffatome enthält und optional eine aromatische Gruppe enthält,
j3 und j4 jeweils unabhängig eine ganze Zahl von 0 bis 4 darstellen und
t eine ganze Zahl von 0 oder 1 darstellt.

8. Thermoplastisches Harz gemäß Anspruch 7, wobei $R^3$ und $R^4$ in der allgemeinen Formel (5) jeweils unabhängig eine Methylgruppe, eine Phenylgruppe oder eine Naphthylgruppe darstellen und $L^1$ in der allgemeinen Formel (5) jeweils unabhängig eine Alkylengruppe darstellt, die 1 bis 5 Kohlenstoffatome enthält und optional einen Substituenten aufweist.

9. Thermoplastisches Harz gemäß Anspruch 7 oder 8, wobei das durch die allgemeine Formel (5) dargestellte Monomer eine durch die folgende Formel (5') dargestellte Struktur aufweist:

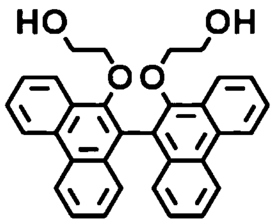

(5').

10. Thermoplastisches Harz gemäß einem der Ansprüche 1 bis 9, das ferner eine Bestandteileinheit umfasst, die sich von mindestens einem Monomer, ausgewählt aus der folgenden Monomergruppe, ableitet:

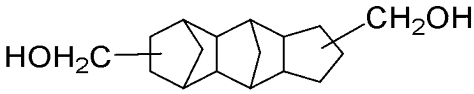
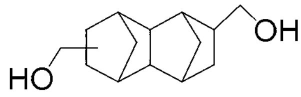

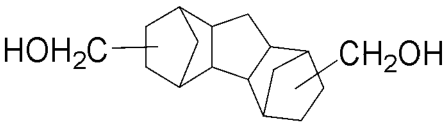
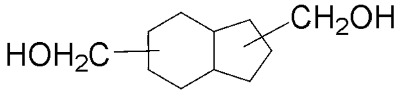

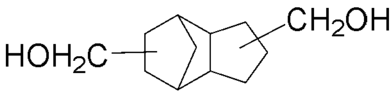
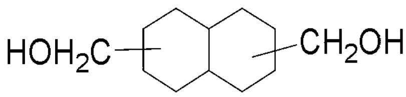

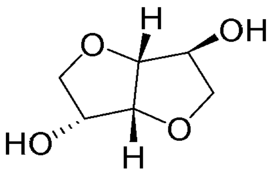
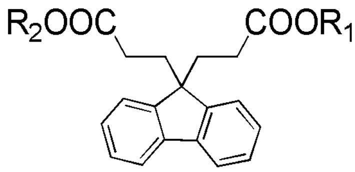

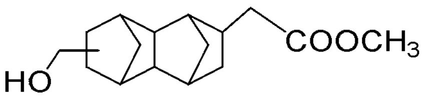
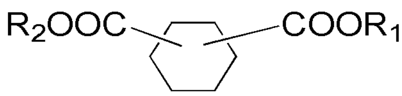

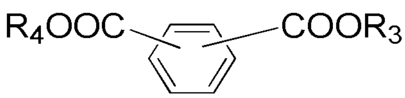
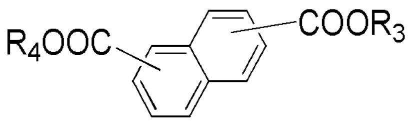

worin $R_a$ und $R_2$ jeweils unabhängig ein Wasserstoffatom, eine Methylgruppe oder eine Ethylgruppe darstellen, $R_3$ und $R_4$ jeweils unabhängig ein Wasserstoffatom, eine Methylgruppe, eine Ethylgruppe oder eine Alkylenglykolgruppe, die 2 bis 5 Kohlenstoffatome enthält, darstellt.

**11.** Thermoplastisches Harz gemäß einem der Ansprüche 1 bis 10, das ein auf Polystyrol umgerechnetes gewichtsmittleres Molekulargewicht (Mw) von 10.000 bis 100.000, gemessen wie in der Beschreibung angegeben, aufweist.

**12.** Thermoplastisches Harz gemäß einem der Ansprüche 1 bis 11, das einen Brechungsindex (nD) von 1,600 bis 1,750, gemessen wie in der Beschreibung angegeben, aufweist.

**13.** Thermoplastisches Harz gemäß einem der Ansprüche 1 bis 12, das eine Abbe-Zahl (v) von 15,0 bis 23,0, gemessen wie in der Beschreibung angegeben, aufweist.

**14.** Thermoplastisches Harz gemäß einem der Ansprüche 1 bis 13, da eine Glasübergangstemperatur von 140°C bis 180°C, gemessen wie in der Beschreibung angegeben, aufweist.

**15.** Optische Linse, umfassend das thermoplastische Harz gemäß einem der Ansprüche 1 bis 14.

## Revendications

**1.** Résine thermoplastique, comprenant une unité constitutive (A) dérivée d'un monomère représenté par la formule générale (1) suivante :

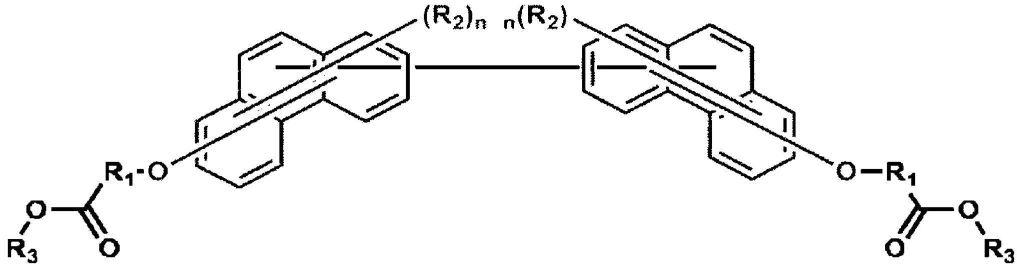
(1)

dans laquelle $R_1$ représente chacun indépendamment un groupe alkylène contenant 1 à 4 atomes de carbone, $R_2$ représente chacun indépendamment un groupe alkyle contenant 1 à 6 atomes de carbone, un groupe aryle contenant 6 à 18 atomes de carbone ou un atome d'halogène, n représente chacun indépendamment 0 ou un entier de 1 à 4, et $R_3$ représente chacun indépendamment un atome d'hydrogène, un groupe alkyle contenant 1 à 6 atomes de carbone ou un groupe alcényle contenant 2 à 4 atomes de carbone.

2. Résine thermoplastique selon la revendication 1, dans laquelle le monomère représenté par la formule générale (1) est un monomère représenté par la formule générale (1a-1) suivante :

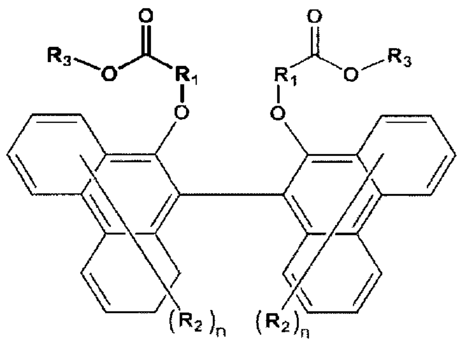
(1a-1)

dans laquelle $R_1$, $R_2$, $R_3$, et n sont tels que définis dans la formule générale (1).

3. Résine thermoplastique selon la revendication 1 ou la revendication 2, dans laquelle la résine thermoplastique est une résine de carbonate de polyester ou une résine de polyester.

4. Résine thermoplastique selon l'une quelconque des revendications 1 à 3, qui comprend une unité constitutive (B) dérivée d'un monomère représenté par la formule générale (6) suivante et/ou une unité constitutive (C) dérivée d'un monomère représenté par la formule générale (7) suivante :

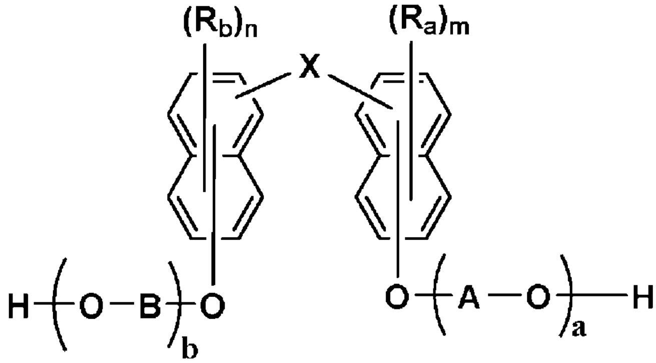
(6)

dans laquelle

$R_a$ et $R_b$ sont chacun indépendamment sélectionnés dans le groupe consistant en : un atome d'hydrogène, un atome d'halogène, un groupe alkyle contenant 1 à 20 atomes de carbone et présentant facultativement un

substituant, un groupe alcoxyle contenant 1 à 20 atomes de carbone et présentant facultativement un substituant, un groupe cycloalkyle contenant 5 à 20 atomes de carbone et présentant facultativement un substituant, un groupe cycloalcoxyle contenant 5 à 20 atomes de carbone et présentant facultativement un substituant, un groupe aryle contenant 6 à 20 atomes de carbone et présentant facultativement un substituant, un groupe hétéroaryle contenant 6 à 20 atomes de carbone et présentant facultativement un substituant, qui comprend un ou plusieurs atomes hétérocycliques sélectionnés dans O, N et S, un groupe aryloxy contenant 6 à 20 atomes de carbone et présentant facultativement un substituant, et -C ≡ C-$R_h$, dans laquelle

$R_h$ représente un groupe aryle contenant 6 à 20 atomes de carbone et présentant facultativement un substituant, ou un groupe hétéroaryle contenant 6 à 20 atomes de carbone et présentant facultativement un substituant, qui comprend un ou plusieurs atomes hétérocycliques sélectionnés dans O, N et S,

X représente une liaison simple ou un groupe fluorène présentant facultativement un substituant,

A et B représentent chacun indépendamment un groupe alkylène contenant 1 à 5 atomes de carbone et présentant facultativement un substituant,

m et n représentent chacun indépendamment un entier de 0 à 6, et

a et b représentent chacun indépendamment un entier de 0 à 10, et/ou

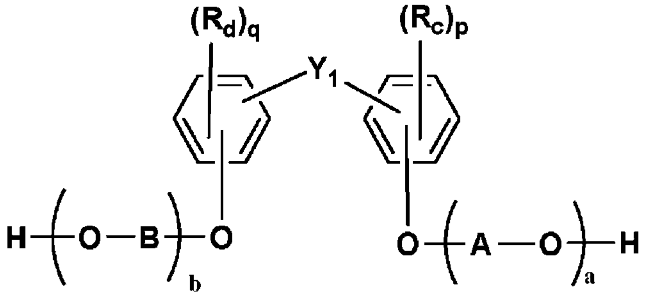
(7)

dans laquelle

$R_c$ et $R_d$ sont chacun indépendamment sélectionnés dans le groupe consistant en : un atome d'hydrogène, un atome d'halogène, un groupe alkyle contenant 1 à 20 atomes de carbone et présentant facultativement un substituant, un groupe alcoxyle contenant 1 à 20 atomes de carbone et présentant facultativement un substituant, un groupe cycloalkyle contenant 5 à 20 atomes de carbone et présentant facultativement un substituant, un groupe cycloalcoxyle contenant 5 à 20 atomes de carbone et présentant facultativement un substituant, un groupe aryle contenant 6 à 20 atomes de carbone et présentant facultativement un substituant,

$Y_1$ représente une liaison simple, un groupe fluorène présentant facultativement un substituant, ou l'une quelconque des formules structurelles représentées par les formules (8) à (14) suivantes :

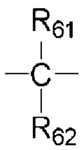
(8)

$-S-$
(9)

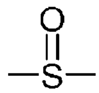
(10)

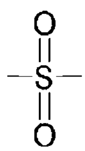
(11)

$-(CH_2)_r-$
(12)

$-O-$
(13)

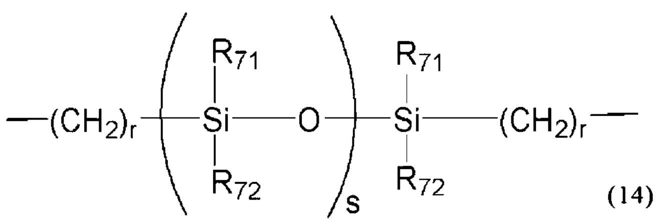
(14)

(dans laquelle, dans les formules (8) à (14),

$R_{61}$, $R_{62}$, $R_{71}$ et $R_{72}$ représentent chacun indépendamment un atome d'hydrogène, un atome d'halogène, un groupe alkyle contenant 1 à 20 atomes de carbone et présentant facultativement un substituant, ou un groupe aryle contenant 6 à 30 atomes de carbone et présentant facultativement un substituant, ou représentent un cycle carboné ou un cycle hétérocyclique contenant 1 à 20 atomes de carbone et présentant facultativement un

substituant, qui est formé en tant que résultat du fait que $R_{61}$ et $R_{62}$, ou $R_{71}$ et $R_{72}$, se lient l'un à l'autre,
r et s représentent chacun indépendamment un entier de 0 à 5 000),
A et B représentent chacun indépendamment un groupe alkylène contenant 1 à 5 atomes de carbone et présentant facultativement un substituant,
p et q représentent chacun indépendamment un entier de 0 à 4, et
a et b représentent chacun indépendamment un entier de 0 à 10.

**5.** Résine thermoplastique selon la revendication 4, dans laquelle, dans la formule générale (6) et la formule générale (7), A et B représentent chacun indépendamment un groupe alkylène contenant 2 ou 3 atomes de carbone.

**6.** Résine thermoplastique selon la revendication 4 ou la revendication 5, qui comprend une unité constitutive dérivée de l'une quelconque des, au moins, BPEF, BNE, BNEF, et DPBHBNA.

**7.** Résine thermoplastique selon l'une quelconque des revendications 1 à 6, qui comprend une unité constitutive (D) dérivée d'un monomère représenté par la formule générale (5) suivante :

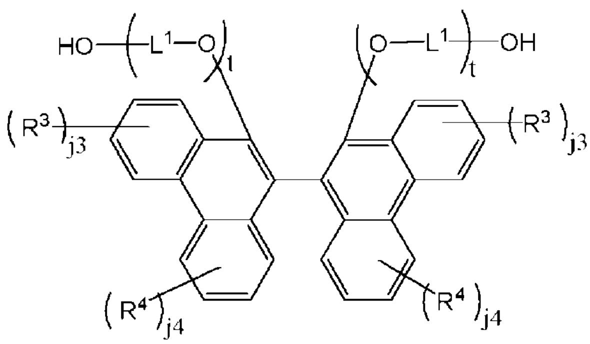

(5)

dans laquelle
$L^1$ représente chacun indépendamment un groupe de liaison divalent ;
$R^3$ et $R^4$ représentent chacun indépendamment un atome d'halogène, ou un substituant contenant 1 à 20 atomes de carbone et contenant facultativement un groupe aromatique ;
j3 et j4 représentent chacun indépendamment un entier de 0 à 4 ; et
t représente un entier de 0 ou 1.

**8.** Résine thermoplastique selon la revendication 7, dans laquelle $R^3$ et $R^4$ dans la formule générale (5) représentent chacun indépendamment un groupe méthyle, un groupe phényle ou un groupe naphtyle, et $L^1$ dans la formule générale (5) représente chacun indépendamment un groupe alkylène contenant 1 à 5 atomes de carbone et présentant facultativement un substituant.

**9.** Résine thermoplastique selon la revendication 7 ou la revendication 8, dans laquelle le monomère représenté par la formule générale (5) présente une structure représentée

:

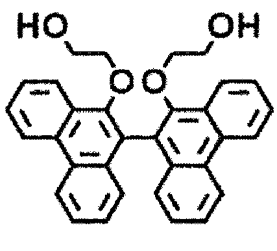

(5')

**10.** Résine thermoplastique selon l'une quelconque des revendications 1 à 9, qui comprend en outre une unité constitutive dérivée d'au moins un monomère sélectionné dans le groupe de monomères suivant :

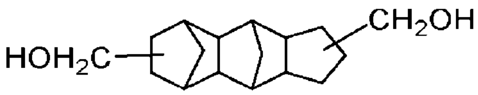
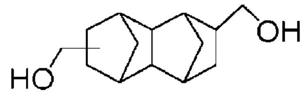
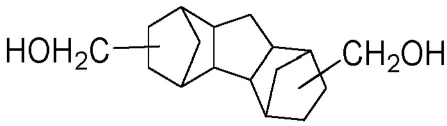
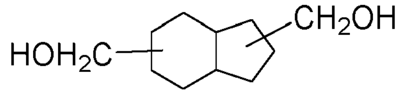
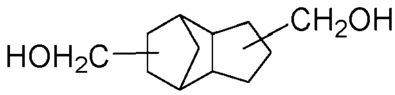
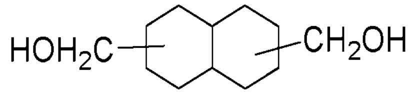
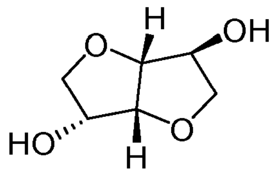
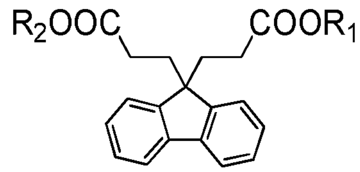
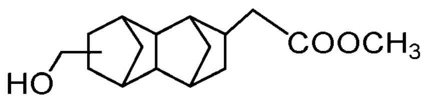
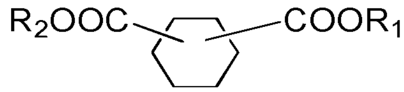
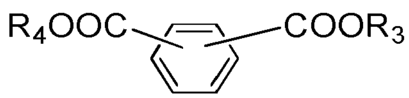
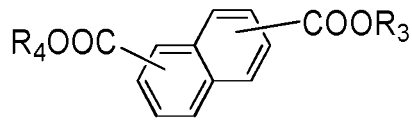

dans laquelle $R_1$ et $R_2$ représentent chacun indépendamment un atome d'hydrogène, un groupe méthyle ou un groupe éthyle, $R_3$ et $R_4$ représentent chacun indépendamment un atome d'hydrogène, un groupe méthyle, un groupe éthyle ou un alkylène glycol contenant 2 à 5 atomes de carbone.

**11.** Résine thermoplastique selon l'une quelconque des revendications 1 à 10, qui présente un poids moléculaire moyen en poids converti en polystyrène (Mw) de 10 000 à 100 000 mesuré tel qu'indiqué dans la spécification.

**12.** Résine thermoplastique selon l'une quelconque des revendications 1 à 11, qui présente un indice de réfraction (nD) de 1,600 à 1,750 mesuré tel qu'indiqué dans la spécification.

**13.** Résine thermoplastique selon l'une quelconque des revendications 1 à 12, qui présente un nombre d'Abbe (v) de 15,0 à 23,0 mesuré tel qu'indiqué dans la spécification.

**14.** Résine thermoplastique selon l'une quelconque des revendications 1 à 13, qui présente une température de transition vitreuse de 140 °C à 180 °C mesurée tel qu'indiqué dans la spécification.

**15.** Lentille optique, comprenant la résine thermoplastique selon l'une quelconque des revendications 1 à 14.

[Figure 1]

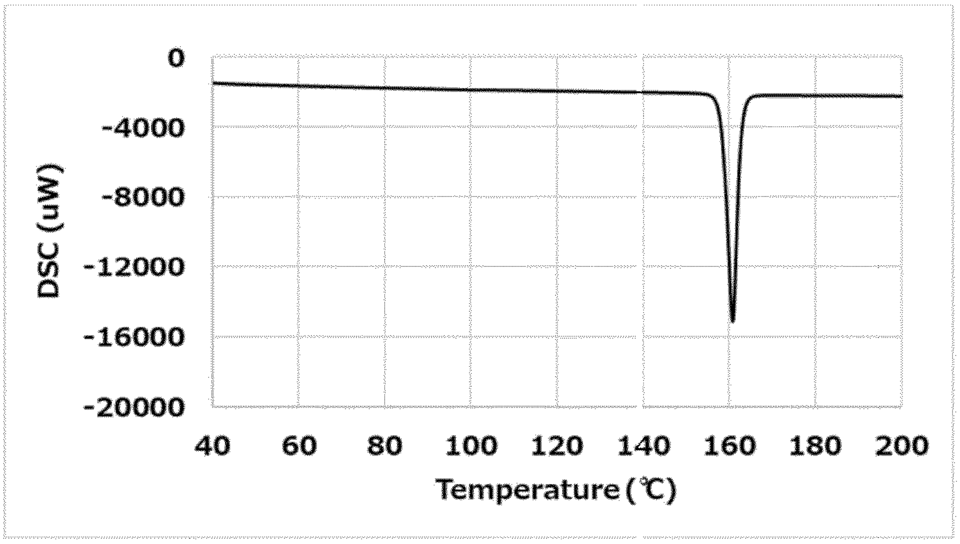


[Figure 2]

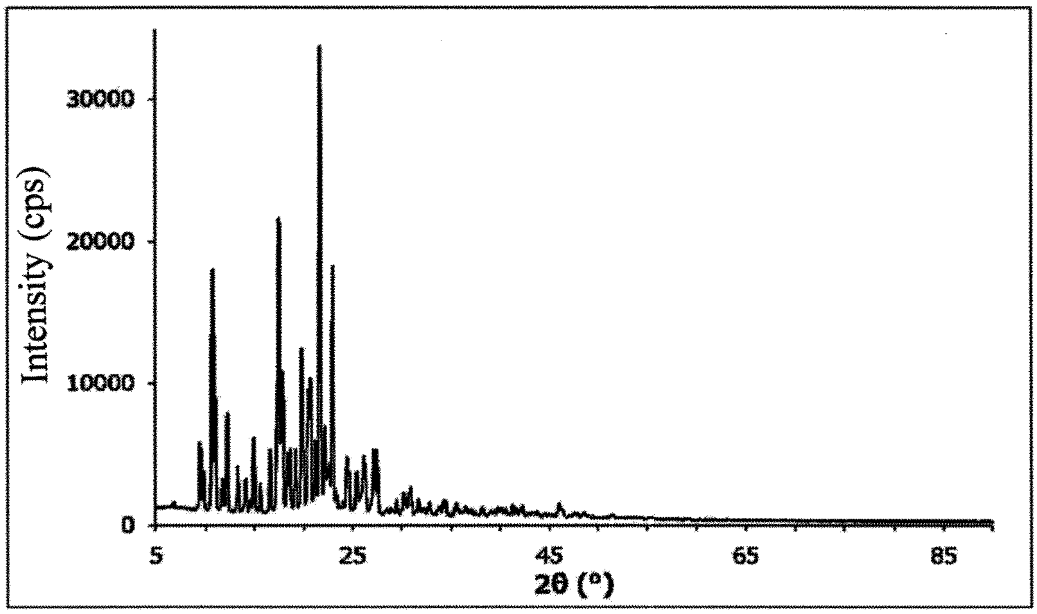

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018002893 A
- JP 2018002894 A
- JP 2018002895 A
- JP 2018059074 A
- WO 2017078073 A
- WO 2021187075 A1
- JP 2001039898 A
- JP 60181043 A
- CN 103787837
- CN 109336887
- JP 7118282 A


### Non-patent literature cited in the description


- *CHEMICAL ABSTRACTS*, 110071-78-8
- *Journal of American Chemical Society*, 2008, vol. 130, 6840
- *CHEMICAL ABSTRACTS*, 1564249-14-4
- *CHEMICAL ABSTRACTS*, 1564249-12-2
- *Tetrahedron*, 2014, vol. 70, 1786-1793
- *CHEMICAL ABSTRACTS*, 196865-17-5
- *CHEMICAL ABSTRACTS*, 1624364-17-5
- *Catalysis Science & Technology*, 2014, vol. 4, 4406-4415
- *CHEMICAL ABSTRACTS*, 1793116-18-3
- Chemical Communications. Cambridge, 2015, vol. 51, 10498-10501
- *CHEMICAL ABSTRACTS*, 2376151-04-9
- *CHEMICAL ABSTRACTS*, 200810-26-0
- *Encyclopedia of Reagents for Organic Synthesis*, 2001, 4425-4430
- *CHEMICAL ABSTRACTS*, 845253-06-7
- *Organic Letters*, 2005, vol. 7, 367-369
- *CHEMICAL ABSTRACTS*, 1613039-61-4
- *AngewandteChemie, International Edition*, 2014, vol. 53, 3436-3441
- *CHEMICAL ABSTRACTS*, 100780-04-9
- *Chemical Society, Chemical Communications*, 1985, vol. 16, 1065-1066